# FASCICULE DE BREVET EUROPEEN

(11) **EP 2 791 419 B1**
(45) Date de publication et mention de la délivrance du brevet: **06.09.2017**
(21) Numéro de dépôt: 12813914.4
(22) Date de dépôt: 12.12.2012
(51) Int. Cl.: E01B 3/46, B28B 19/00, B29C 37/00, B29C 43/22, B29C 33/36, E01B 3/42

(54) **SEMELLE SOUS TRAVERSE SOLIDARISABLE À UNE TRAVERSE EN BÉTON OU ANALOGUE, TRAVERSE À LAQUELLE EST SOLIDARISÉE UNE TELLE SEMELLE ET PROCÉDÉS DE FABRICATION ET MOYENS DE MOULAGE CORRESPONDANTS.**
BESOHLUNG FÜR EINE BETONSCHWELLE ODER DERGLEICHEN, MIT EINER SOLCHEN BESOHLUNG FEST VERBUNDENE BETONSCHWELLE SOWIE ENTSPRECHENDE HERSTELLUNGSVERFAHREN UND MITTEL ZUR FORMGEBUNG.
SOLE FOR A CONCRETE OR SIMILAR SLEEPER, SLEEPER SECURELY FITTED WITH SUCH A SOLE, AND CORRESPONDING MANUFACTURING PROCESSES AND MOULDING MEANS.

(30) Priorité: 12.12.2011 FR 1161445
(43) Date de publication de la demande: 22.10.2014
(73) Titulaire: Fimor, 72100 Le Mans (FR)
(72) Inventeur: ZUCKERMAN, Manuel, F-75013 Paris (FR); FOUQUET, Arnaud, F-72210 Chemiré le Gaudin (FR)
(74) Mandataire: Derambure Conseil
(86) Numéro de dépôt international: PCT/FR2012/052912
(87) Numéro de publication internationale: WO 2013/088072

(56) Documents cités:
- EP-A1- 0 833 008
- EP-A2- 1 186 709
- WO-A1-98/46840
- WO-A1-2008/122066
- DE-A1-102004 011 610
- DE-U1-202007 005 206
- ES-A1- 2 337 644
- JP-A- 8 085 139
- JP-A- 8 090 618
- US-A- 3 089 191
- US-A1- 2004 109 910

## Description

L'invention a pour premier objet, un procédé de fabrication d'une semelle sous traverse pour une traverse en béton ou analogue pour rail de matériel roulant, en particulier un train à grande vitesse, cette semelle comprenant une paroi de support, ayant une face d'appui et à l'opposé une face de solidarisation pourvue d'une distribution d'éléments de reliefs d'accrochage endogènes - creux, saillies -. Elle a pour deuxième objet, une semelle sous traverse réalisée par ce procédé, pour troisième objet, un procédé de fabrication de traverse en béton ou analogue pourvue d'une semelle sous traverse, et pour quatrième objet, un moyen de moulage de plaque de semelle spécialement destiné à la mise en oeuvre dudit procédé de fabrication de semelle sous traverse.

Le document EP-A-0833008 décrit une semelle pour traverse de chemin de fer en béton qui comprend, d'une part, une plaque de support dont la face supérieure noyée dans le béton est pourvue de protubérances d'accrochage dans la traverse et de moyens d'échappement de l'air inclus dans la traverse lors de la coulée du béton et, d'autre part, un revêtement élastomère solidaire d'au moins la face inférieure de la plaque. Les termes « supérieur » et « inférieur » se comprennent ici, comme dans tout le texte, en référence à la traverse de chemin de fer installée en situation, le ballast étant vers le bas et rail vers le haut.

Le document EP-A-1186709 décrit une semelle pour traverse en béton du type de celles en matière flexible, déformable et élastique, mises en place pendant ou après le vibrage du béton de la traverse, par emboîtement dans le béton, qui comprend une série d'épaulement linéaux, continus, parallèles, longitudinaux, ayant un profil saillant en double harpon.

Dans le même contexte et pour la même application, le document WO 2008/122066 décrit surtout une semelle dont la structure de la surface en contact avec la traverse en béton comprend des saillies creuses, une réalisation avec des cavités formant pores et/ou canaux étant également mentionnée. Mais il est à craindre qu'une saillie creuse ne permette pas un accrochage suffisant sur le béton.

Le document US-B-7278588 décrit également une semelle pourvue de saillies creuses.

Ainsi, les documents EP-A-0833008, ES2337644, EP-A-1186709, WO 2008/122066, DE202007005206 et US-B-7278588 visent différentes variantes d'un même premier type de semelle pour traverse en béton ou analogue pour rail de matériel roulant, et ce faisant, d'un même premier type de traverse pourvue d'une telle semelle sous traverse, dans lequel la semelle comprend une paroi de support dont la face supérieure est destinée à être solidarisée à la face inférieure de la traverse, par des saillies d'accrochage noyées dans le béton ou analogue de la traverse qui sont endogènes à la paroi de support de la semelle. Mais, force est de constater qu'aucun de ces trois documents ne décrit la fabrication des semelles à moyens d'accrochage endogènes selon ce premier type, le document WO 2008/122066 se bornant à se référer, sans plus de précision, aux techniques de moulage par compression, moulage par injection, extrusion ou vulcanisation.

Le document US2004109910 décrit un procédé dans lequel une plaque, sous forme fluide, est pressée entre deux rouleaux, l'un des rouleaux comportant des cavités individuelles pour définir des saillies sur la plaque. La plaque est enroulée autour d'un cylindre, et des tiges de piston, entre lesquelles sont formées les saillies, sont déplacées radialement pour le démoulage des saillies. Plus précisément, une pluralité de bandes est disposée à la surface du rouleau, parallèlement à son axe longitudinal. Durant la phase de moulage, les bandes sont appuyées contre la surface de rouleau, et pendant la phase de démoulage, les tiges de piston appuient contre les bandes afin de les déplacer radialement de manière à élargir les cavités individuelles pour permettre l'extraction des saillies.

Toutefois, ce document ne décrit pas un moyen de moulage de plaque de semelle ayant un paroie latérale périphérique formant une cavité de moulage. En effet, il décrit l'utilisation de plusieurs cavités indépendantes, comprises sur la surface extérieure d'un rouleau, pour former les saillies. De plus, aucune déformation élastique temporaire des saillies n'est décrite dans ce document. Le démoulage nécessite le débattement radial des bandes, à l'aide de pistons, pour extraire les saillies.

Le document US3089191 décrit une feuille de thermoplastique passée entre deux rouleaux, dont l'un présente des cavités. Le matériau est pressé entre les deux rouleaux de manière à entrer dans la cavité. Ce document décrit, une déformation élastique de la semelle pour extraire les protubérances du rouleau présentant des cavités.

Toutefois, ce document ne décrit pas un moyen de moulage de plaque de semelle ayant un paroi latérale périphérique formant une cavité de moulage. En effet, il décrit l'utilisation de plusieurs cavité indépendantes, comprises sur la surface extérieure d'un rouleau, pour former des saillies.

Le document DE 10 2004 011 610 se rapporte à ce premier type de semelle dans une réalisation comportant des saillies d'accrochage en forme de T ou de pseudo T. Une telle semelle est réalisée par un procédé comprenant une étape de moulage par injection ou par compression de sorte à obtenir des saillies droites, puis une étape de refroidissement, puis une étape de conformation pour obtenir la forme de T ou de pseudo T. Un tel procédé qui comporte une telle succession d'étapes est complexe et donc forcément coûteux, ce qui est rédhibitoire pour l'application envisagée.

Le document EP-A-0733738 concerne également une traverse de chemin de fer, comportant un bloc de béton reposant sur un ballast, et une semelle sous traverse, en matériau visco-élastique, couvrant solidairement la face inférieure du bloc de béton, servant d'intermédiaire d'appui entre le bloc de béton et le ballast. La semelle incorpore dans sa face supérieure des gravillons en saillie s'intégrant dans la face inférieure du bloc de béton, pour assurer la solidarisation bloc-semelle. Le procédé de fabrication d'une telle traverse comporte la succession des étapes consistant à :
a) préfabriquer une plaque en matériau visco-élastique, aux dimensions de la semelle à réaliser, avec incorporation des gravillons en saillie,
b) fabriquer le bloc par moulage de béton dans une empreinte en y intégrant la plaque préfabriquée pour constituer la semelle dont les gravillons s'intègrent au béton, et
c) autoriser ou provoquer la prise du béton puis démouler le bloc portant solidairement la semelle.

Le document WO98/46840 propose également une semelle élastique solidarisée à du béton au moyen d'une couche de gravillons de type quartz, insérée entre le béton et la semelle en matériau élastique.

Le document EP-A-0733738 vise un second type de semelle pour traverse en béton ou analogue pour rail de matériel roulant et un second type de traverse pourvue d'une telle semelle sous traverse, dans lequel il est prévu des moyens d'accrochage exogènes à la semelle.

D'autres réalisations de semelles sous traverse selon ce second type sont connues de l'état de la technique.

Les semelles sous traverse selon ce second type présentent nombres de contraintes et d'inconvénients découlant du caractère exogène des moyens d'accrochage. L'invention ne concerne pas ce second type de semelles sous traverse et de traverses en béton pourvue de telles semelles.

Les fonctions que doivent assurer, les exigences que doivent remplir, et les performances que doivent satisfaire, les semelles pour traverses en béton ou analogue et les traverses en béton ou analogue pour rail de matériel roulant pourvues de telles semelles sous traverses, tel qu'en particulier les trains à grande vitesse, sont d'ordre technique, industriel, financier, et sont connues de l'homme du métier ou lui sont accessibles. Il en est de même de caractéristiques générales telles que les ordres dimensionnels.

Bien entendu, des semelles analogues peuvent être également envisagées pour des applications autres que les rails pour matériel roulant et en particulier autres que pour les trains à grande vitesse, mais pour lesquelles les fonctions, les exigences et les performances dont il a été précédemment question, sont analogues dans leur nature sans l'être forcément exactement dans leur degré. Les expressions « semelle pour traverse en béton [ou analogue] pour rail de matériel roulant » et « semelle sous traverse », ici utilisées, doivent être comprises comme visant ce cas spécifique et le cas de telles applications autres, telles qu'elles ont été définies ci-dessus.

L'invention vise le cas d'une semelle pour traverse en béton ou analogue pour rail de matériel roulant, en particulier un train à grande vitesse, et d'une traverse pourvue d'une telle semelle sous traverse, affilié au premier type identifié ci-dessus, où l'accrochage est endogène à la paroi de support de la semelle.

S'agissant de l'injection ou de la coulée par gravité des polymères, il fait partie des connaissances de l'homme du métier que l'extraction d'une pièce moulée comportant des contre-dépouilles requiert des systèmes spéciaux tels que des moules à tiroirs, ou un usinage après moulage avec un moule rigide. De tels systèmes spéciaux et un tel usinage sont complexes, couteux et inadaptés au cas de semelles pour traverses en béton ou analogue pour rail de matériel roulant.

Le problème à la base de l'invention est donc de pouvoir fabriquer des semelles sous traverses et conséquemment des traverses, telles que pour rail de matériel roulant et en particulier un train à grande vitesse, les semelles étant à moyens d'accrochage endogènes selon le premier type identifié ci-dessus d'une façon adaptée au contexte d'application et de mise en oeuvre d'une telle semelle sous traverse, en termes d'ordre technique (absorption des vibrations, durabilité...), industriel (facilité de fabrication, de manipulation, de stockage, de transport tant des semelles sous traverses que des traverses pourvues de telles semelles, entretien, remplacement), ainsi que d'ordre financier (coût de revient et coût de maintenance).

À cet effet, selon un premier aspect, l'invention a pour objet un procédé de fabrication d'une semelle sous traverse comprenant une paroi de support, ayant une face d'appui et à l'opposé une face de solidarisation pourvue d'une distribution d'éléments de reliefs d'accrochage endogènes - creux, saillies -, aptes, la semelle étant dans sa configuration générale finale et à l'état solide, à être inclus dans une face de solidarisation d'une traverse en béton ou analogue ayant à l'opposé une face de support, un tel élément de relief endogène comprenant une partie rétrécie proximale vers la face de solidarisation, une partie élargie distale, et une ou plusieurs facettes s'étendant parallèlement à, ou de façon inclinée par rapport à, la face de solidarisation.

Selon ce procédé :
- l'on dispose d'un moyen de moulage de plaque de semelle présentant une certaine rigidité, ayant une paroi latérale périphérique et une face de conformation de moulage comportant une distribution d'éléments de reliefs de moulage - saillies, creux -, formant une cavité de moulage apte à être emplie de la matière constitutive de la semelle,
- l'on dispose de matière polymérique apte à être amenée:
   o d'abord dans un état fluide en vue de son moulage,
   o dans un état solide en vue notamment d'associer la semelle démoulée au béton ou analogue de la traverse,
   o et dans un état déformable où elle présente une certaine capacité de déformation locale temporaire au moins sensiblement élastique,
- l'on amène la matière polymérique audit état fluide et l'on en emplit la cavité de moulage du moyen de moulage de plaque de semelle, en vue du moulage de la plaque de semelle,
- ultérieurement, l'on amène la matière polymérique audit état déformable,
- l'on dispose d'un moyen de moulage de plaque de semelle dont la forme de la cavité de moulage est en correspondance - de façon complémentaire - avec celle de la semelle à réaliser, la face de conformation de moulage comportant une distribution d'éléments de reliefs de moulage en correspondance - de façon complémentaire - avec la distribution des éléments de relief d'accrochage, un élément de relief de moulage comprenant une partie rétrécie proximale, une partie élargie distale, et une ou plusieurs facettes s'étendant parallèlement à, ou de façon inclinée par rapport à la face de conformation de moulage,
- l'on dispose de matière polymérique, en particulier d'élastomère de polyuréthane thermodurcissable et, alors que la matière polymérique est à l'état déformable, l'on exerce sur la plaque de semelle préalablement moulée, par rapport au moyen de moulage de plaque de semelle, une force relative d'extraction telle que l'on déforme élastiquement et temporairement ses éléments de reliefs d'accrochage dans ledit état déformable, de sorte à les désolidariser des éléments de reliefs de moulage, ce qui permet de démouler la plaque de semelle,
- puis, l'on dispose la semelle constituée par ou provenant de la plaque de semelle dans la configuration générale qui est sa configuration générale finale alors que la matière polymérique est dans ledit état solide.

Selon une première réalisation :
- l'on amène la matière polymérique audit état fluide et l'on en emplit la cavité de moulage du moyen de moulage de plaque de semelle,
- puis, l'on amène la matière polymérique audit état déformable,
- puis, dans cet état déformable, l'on exerce sur la plaque de semelle préalablement moulée la force relative d'extraction,
- puis, l'on dispose la semelle dans la configuration générale finale avec la matière polymérique audit état solide,
la matière polymérique étant sélectionnée pour être apte à suivre cette séquence opératoire.

Selon une seconde réalisation :
- l'on amène la matière polymérique audit état fluide et l'on en emplit la cavité de moulage du moyen de moulage de plaque de semelle,
- puis l'on amène la matière polymérique audit état solide,
- puis, l'on amène la matière polymérique audit état déformable,
- puis, dans cet état déformable, l'on exerce sur la plaque de semelle préalablement moulée la force relative d'extraction,
- puis, l'on dispose la semelle dans la configuration générale finale avec la matière polymérique audit état solide,
la matière polymérique étant sélectionnée pour être apte à suivre cette séquence opératoire.

Selon une réalisation, lorsque l'on moule la plaque de semelle dans le moyen de moulage de plaque de semelle, la face d'appui est libre ou moulée sans éléments de reliefs.
Selon une réalisation, l'on amène la matière polymérique audit état déformable et/ou l'on amène la matière polymérique audit état solide, par un processus thermique.

Selon une réalisation, l'on dispose d'un moyen de moulage de plaque de semelle comportant une distribution d'éléments de reliefs de moulage dont la forme correspond à une distribution de reliefs d'accrochage endogènes de la plaque de semelle telle qu'un tel relief endogène comprend une partie élargie et une partie rétrécie dont les diamètres sont dans un rapport au moins égal à 1,5, plus particulièrement au moins égal à 2, plus particulièrement au moins égal à 3.

Selon les réalisations, l'on applique la force relative d'extraction sur le moyen de moulage de plaque de semelle, en particulier vers sa paroi latérale périphérique et/ou sur la plaque de semelle, en particulier vers un bord adjacent à la paroi latérale périphérique du moyen de moulage de plaque de semelle.

Selon une réalisation, lorsque l'on exerce la force relative d'extraction, l'on déforme élastiquement et temporairement la paroi de support de la plaque de semelle, en particulier on l'incurve.

Selon une réalisation, l'on désolidarise les éléments de reliefs d'accrochage des éléments de reliefs de moulage, de façon progressive, successivement pour des groupes adjacents d'éléments de reliefs d'accrochage, en particulier des groupes d'éléments de reliefs d'accrochage d'étendue localisée et limitée. Ainsi, selon une réalisation, l'on dispose et l'on met en oeuvre un moyen de moulage de plaque de semelle ayant une face de conformation de moulage comprenant plusieurs parties successives, en particulier des parties de face de conformation de moulage d'étendue localisée et limitée.

Selon une réalisation, lorsque l'on emplit la cavité de moulage du moyen de moulage de plaque de semelle avec la matière polymérique, l'on moule la plaque de semelle pleine ou substantiellement pleine et dépourvue de cavité interne.

Selon une réalisation, l'on emplit la cavité de moulage du moyen de moulage de plaque de semelle avec une seule matière polymérique de sorte à réaliser une semelle sous traverse unitaire.

Selon une réalisation, lorsque l'on emplit la cavité de moulage du moyen de moulage de plaque de semelle avec la matière polymérique, l'on inclut dans la cavité de moulage un ou plusieurs moyens solides fonctionnels, noyés dans la plaque de semelle moulée, en particulier un moyen de rigidification présentant une certaine rigidité et/ou un moyen d'absorption des contraintes d'écrasement présentant une certaine élasticité, tel qu'une plaque, une couche, un treillis, des inserts, des broyats dispersés ou liés, une mousse, ou analogue. En particulier, l'on inclut le ou les moyens solides fonctionnels dans la cavité de moulage à l'extérieur des reliefs de moulage, de sorte que le moyen solide fonctionnel soit noyé dans la paroi de support de la semelle et non dans les éléments de reliefs d'accrochage.

Selon une réalisation, lors du moulage de la plaque de semelle dans la cavité de moulage du moyen de moulage de plaque de semelle, l'on fait vibrer le moyen de moulage de plaque de semelle, en vue de l'emplissage avec la matière polymérique des parties en creux de la cavité de moulage.

Selon les réalisations, soit l'on moule la plaque de semelle constituant une semelle sous traverse individualisée soit l'on moule la plaque de semelle à partir de laquelle l'on individualise au moins une semelle sous traverse, moyennant une coupe transversale de la plaque de semelle.

Selon les réalisations, l'on dispose d'un moyen de moulage de plaque de semelle dont la face de conformation de moulage comporte une distribution d'éléments de reliefs de moulage allongés et/ou ponctuels, et l'on réalise une semelle comportant une distribution d'éléments de reliefs d'accrochage allongés et/ou ponctuels. L'on dispose d'un moyen de moulage de plaque de semelle dont la face de conformation de moulage comporte une distribution, régulière ou irrégulière, d'éléments de reliefs de moulage identiques ou analogues, et l'on réalise une semelle comportant une distribution, régulière ou irrégulière, d'éléments de reliefs d'accrochage identiques ou analogues. L'on dispose d'un moyen de moulage de plaque de semelle dont la face de conformation de moulage comporte une distribution d'éléments de reliefs de moulage ayant en coupe longitudinale une forme générale de T, V, U à branches inclinées, ou de pseudo T, V, U à branches inclinées, ou s'inscrivant dans une enveloppe forme générale de T, de V, de U à branches inclinées, ou de pseudo T, V, U à branches inclinées, et l'on réalise une semelle comportant une distribution d'éléments de reliefs d'accrochage ayant une forme en correspondance.

Selon une réalisation, l'on sélectionne le polyuréthane comme matière polymérique.

Selon une réalisation, le moyen de moulage de plaque de semelle est réalisé dans un matériau déformable élastiquement, en particulier élastomère, lorsqu'on démoule la plaque de semelle.

Selon une réalisation, l'on déplace le moyen de moulage de plaque de semelle de manière continue sans fin le long d'une trajectoire le long de laquelle sont disposées une station initiale, une station de moulage à laquelle la semelle est moulée, une station de refroidissement à laquelle le matériau passe de son état fluide à son état déformable, et une station de démoulage à laquelle la semelle est démoulée.

Selon une réalisation, le système de transport déplaçant le moyen de moulage de plaque de semelle comprend une portion arquée déformant le moyen de moulage de plaque de semelle dans le sens de l'ouverture.

Selon un deuxième aspect, l'invention a pour objet une semelle sous traverse comprenant une paroi de support ayant une face d'appui et une face de solidarisation pourvue d'une distribution d'éléments de reliefs d'accrochage endogènes - creux, saillies -, aptes, la semelle étant dans sa configuration générale finales et à l'état solide, à être inclus dans une traverse en béton ou analogue, un tel élément de relief d'accrochage endogène comprenant une partie rétrécie proximale vers la face de solidarisation, une partie élargie distale, et une ou plusieurs facettes s'étendant parallèlement à, ou de façon inclinée par rapport à, la face de solidarisation.

Une telle semelle sous traverse est réalisée par le procédé précédemment décrit et est telle qu'un élément de relief d'accrochage endogène comprend une partie élargie et une partie rétrécie dont les diamètres sont dans un rapport au moins égal à 1,25, plus particulièrement au moins égal à 2, plus particulièrement au moins égal à 3 et au plus égal à 4.

Selon une réalisation, la semelle est pleine ou substantiellement pleine et dépourvue de cavité interne.

Selon une réalisation, la semelle est unitaire étant réalisée avec une seule matière polymérique.

Selon une réalisation, la semelle inclut un moyen de rigidification présentant une certaine rigidité et/ou un moyen d'absorption des contraintes d'écrasement présentant une certaine élasticité, tel qu'une plaque, une couche, un treillis, des inserts, des broyats dispersés ou liés, une mousse, ou analogue, en particulier dans la paroi de support de la semelle et non dans les éléments de reliefs d'accrochage.

Selon les réalisations, la semelle sous traverse comporte une distribution régulière ou irrégulière, d'éléments de reliefs d'accrochage allongés et/ou ponctuels. En une distribution d'éléments de reliefs d'accrochage ayant en coupe longitudinale une forme générale de T, de V, de U à branches inclinées, ou de pseudo T, V, U à branches inclinées, ou s'inscrivant dans une enveloppe forme générale de T, V, U à branches inclinées, ou de pseudo T, V, U à branches inclinées.

Selon une réalisation, les éléments de relief d'accrochage présentent une partie élargie distale conique se rétrécissant en s'éloignant de la face de solidarisation.

Selon une réalisation, la semelle sous traverse est réalisée en ou à base de polyuréthane comme matière polymérique.

Selon une réalisation, la semelle sous traverse comprend au moins un, préférentiellement trois, bord périphérique adapté pour un maintien latéral de la semelle sous traverse lorsqu'elle est assemblée à une traverse.

Selon un troisième aspect, l'invention a pour objet un procédé de fabrication d'une traverse en béton ou analogue pourvue d'une semelle sous traverse, dans lequel :
- l'on dispose d'un moyen de moulage de traverse, rigide, formant une cavité de moulage dont la forme est en correspondance avec celle d'une traverse, apte à être emplie du béton ou analogue formant la traverse,
- l'on dispose de béton ou analogue,
- l'on emplit la cavité de moulage du moyen de moulage de traverse avec le béton ou analogue à l'état fluide,
- puis, alors que le béton ou analogue n'est pas encore pris en masse, l'on dépose sur la face de solidarisation de la traverse en béton ou analogue, une semelle réalisée par le procédé précédemment décrit, ou une semelle telle que précédemment décrite, dans sa configuration générale finale, de sorte que ses éléments de reliefs d'accrochage endogènes soient inclus dans ladite face de solidarisation de la traverse en béton ou analogue, et que la paroi de support de la semelle ne soit pas incluse ou pas totalement incluse dans ladite face de solidarisation de la traverse en béton ou analogue, de sorte que la face d'appui de la semelle sous traverse soit laissée libre pour former la face d'appui de la traverse pourvue de la semelle sous traverse,
- puis l'on laisse le béton ou analogue de la traverse prendre en masse, de sorte que la semelle sous traverse fasse ainsi partie intégrante de la traverse, les éléments de reliefs d'accrochage de la semelle assurant par eux-mêmes la solidarisation rigide de la semelle sous traverse à la traverse.

Selon une réalisation, l'on dispose le moyen de moulage de traverse de façon générale horizontale et l'on dépose la semelle par-dessus la face de solidarisation de la traverse en béton ou analogue laissée accessible en position supérieure.

Selon une réalisation, lors du moulage de la traverse dans la cavité de moulage du moyen de moulage de traverse, l'on fait vibrer le moyen de moulage de traverse.

Selon une réalisation, alors que le béton ou analogue n'est pas encore pris en masse, et lorsque l'on dépose la semelle sur la face de solidarisation de la traverse, l'on effectue de petits déplacements de la semelle par rapport au béton ou analogue de la traverse, pour le positionnement de la semelle par rapport à la traverse.

Selon une réalisation, lorsque l'on dépose sur la face de solidarisation de la traverse en béton ou analogue, la semelle, l'air compris entre la semelle et la traverse est évacué par des trous d'évents.

Selon un quatrième aspect, l'invention a pour objet un moyen de moulage de plaque de semelle spécialement destiné à la mise en oeuvre du procédé de fabrication d'une semelle sous traverse tel qu'il a été décrit, qui présente une certaine rigidité et comporte une paroi latérale périphérique et une face de conformation de moulage comportant une distribution d'éléments de reliefs de moulage - saillies, creux -, formant une cavité de moulage apte à être emplie de la matière constitutive de la semelle, et dont la forme est en correspondance avec celle d'une plaque de semelle d'au moins une semelle sous traverse à réaliser comprenant une paroi de support, ayant une face d'appui et à l'opposé une face de solidarisation pourvue d'une distribution d'éléments de reliefs d'accrochage endogènes - creux, saillies -, un tel élément de relief endogène comprenant une partie rétrécie proximale vers la face de solidarisation, une partie élargie distale, et une ou plusieurs facettes s'étendant parallèlement à, ou de façon inclinée par rapport à, la face de solidarisation.

Selon les réalisations, le moyen de moulage de plaque de semelle est soit un moule ouvert soit un moule ou fermé et/ou est soit un moule avec insert de constitution de reliefs de moulage soit un moule sans insert.

Selon une réalisation, le moyen de moulage de plaque de semelle comporte une distribution d'éléments de reliefs de moulage allongés et/ou ponctuels.

Selon une réalisation, le moyen de moulage de plaque de semelle comporte une distribution, régulière ou irrégulière, d'éléments de reliefs de moulage identiques ou analogues.

Selon une réalisation, le moyen de moulage de plaque de semelle comporte une distribution d'éléments de reliefs de moulage ayant en coupe longitudinale une forme générale de T, V, U à branches inclinées, ou de pseudo T, V, U à branches inclinées, ou s'inscrivant dans une enveloppe forme générale de T, de V, de U à branches inclinées, ou de pseudo T, V, U à branches inclinées.

Selon une réalisation, le moyen de moulage de plaque de semelle est réalisé dans un matériau déformable élastiquement, en particulier élastomère, lorsqu'on démoule la plaque de semelle.

Selon un cinquième aspect, l'invention a pour objet une installation de fabrication de semelle comprenant un tel moyen de moulage de plaque de semelle et un système de transport adapté pour déplacer le moyen de moulage de plaque de semelle le long d'une trajectoire le long de laquelle sont disposées une station initiale, une station de moulage à laquelle la semelle est moulée, une station de refroidissement à laquelle le matériau passe de son état fluide à son état déformable, et une station de démoulage à laquelle la semelle est démoulée.

Selon une réalisation, le système de transport déplaçant le moyen de moulage de plaque de semelle comprend une portion arquée déformant le moyen de moulage de plaque de semelle dans le sens de l'ouverture.

Plusieurs réalisations possibles mais non limitatives de l'invention sont maintenant décrites en relation avec les figures annexés, à savoir :
- La figure 1 est une vue en perspective isométrique d'un moyen de moulage de plaque de semelle selon une première réalisation possible, vide, du côté de la cavité de moulage, illustrant sa distribution de reliefs de moulage.
- La figure 2 est une vue éclatée, partielle, à plus grande échelle, en coupe transversale, du moyen de moulage de plaque de semelle selon la figure 1.
- La figure 3 est une vue à plus grande échelle, en coupe transversale, du moyen de moulage de plaque de semelle selon la figure 1.
- La figure 4 est une vue en coupe transversale, d'un moyen de moulage de plaque de semelle selon une deuxième réalisation possible, la semelle sous traverse étant disposée dans le moyen de moulage.
- La figure 5 est une vue en perspective isométrique d'un moyen de moulage de plaque de semelle selon une troisième réalisation possible, vide, du côté de la cavité de moulage, illustrant sa distribution de reliefs de moulage.
- La figure 6 est une vue éclatée, partielle, à plus grande échelle, en coupe transversale, du moyen de moulage de plaque de semelle selon la figure 5.
- La figure 7 est une vue à plus grande échelle, en coupe transversale, du moyen de moulage de plaque de semelle selon la figure 5.
- La figure 8 est une vue en perspective isométrique d'un moyen de moulage de plaque de semelle selon une quatrième réalisation possible, vide, du côté de la cavité de moulage, illustrant sa distribution de reliefs de moulage.
- La figure 9 est une vue éclatée, partielle, à plus grande échelle, en coupe transversale, du moyen de moulage de plaque de semelle selon la figure 8.
- La figure 10 est une vue à plus grande échelle, en coupe transversale, du moyen de moulage de plaque de semelle selon la figure 8.
- La figure 11 est une vue en coupe transversale d'une réalisation possible de traverse en béton ou analogue pourvue d'une réalisation possible de semelle sous traverse qui en est solidaire.
- La figure 12 est une vue en perspective de la semelle sous traverse de la traverse en béton ou analogue de la figure 11.
- La figure 13 est une vue à plus grande échelle, de côté, partielle de la semelle sous traverse de la figure 12.
- La figure 14 est une vue en coupe transversale d'une autre réalisation possible de traverse en béton ou analogue pourvue d'une autre réalisation possible de semelle sous traverse qui en est solidaire.
- La figure 15 est une vue en coupe transversale d'une autre réalisation possible de traverse en béton ou analogue pourvue d'une autre réalisation possible de semelle sous traverse qui en est solidaire.
- La figure 16 est une vue en coupe transversale illustrant une réalisation possible du procédé concernant l'étape de démoulage.

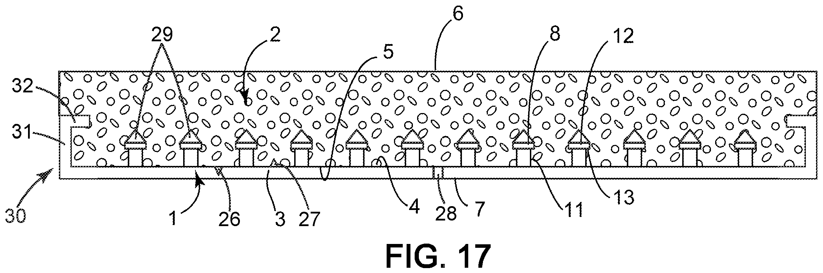

- La figure 17 est une vue similaire à la figure 11 pour une variante de réalisation de traverse et semelle solidaires.
- La figure 18 est une vue de dessous d'une traverse à laquelle plusieurs semelles ont été solidarisées.
- La figure 19 est une vue schématique de dessus d'une installation de fabrication de semelle, selon un exemple de réalisation.

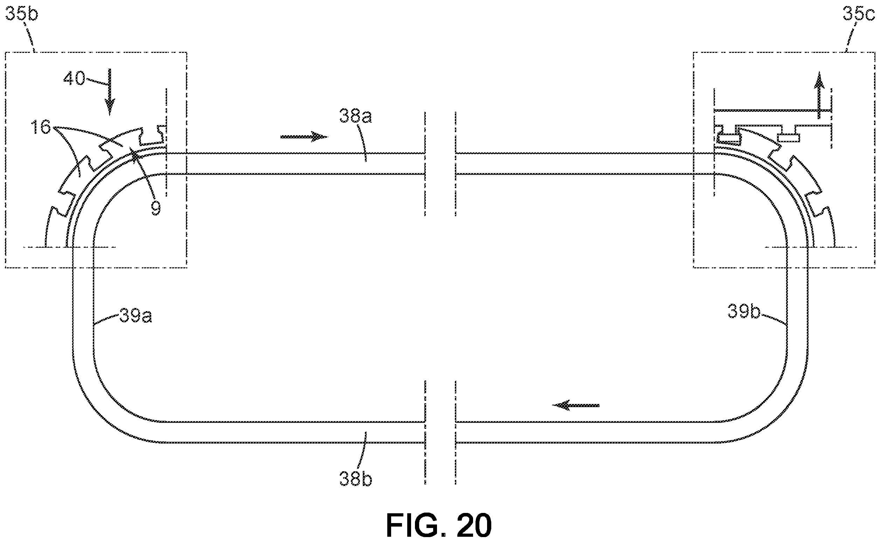

- La figure 20 est une vue schématique de côté d'une installation de fabrication de semelle, selon un autre exemple de réalisation.

L'invention se rapporte, d'une part, aux semelles sous traverses 1 spécialement destinées à des traverse en béton ou analogue pour rail de matériel roulant, en particulier un train à grande vitesse et, d'autre part, aux traverses 2 + 1 pourvues de telles semelles sous traverses 1, l'une et l'autre affiliées à un premier type connu de l'homme du métier et identifié ci-dessus où l'accrochage semelle 1 - traverse 2 est endogène à la paroi de support 3 de la semelle 1 du côté de sa face de solidarisation 4.

Sauf s'il est précisé autrement ou qu'il se comprend d'évidence autrement du contexte, l'on entend par « traverse » 2, la traverse *stricto sensu* dépourvue de semelle sous traverse 1. Lorsque l'on vise la traverse pourvue d'une semelle sous traverse 2 + 1, cela est précisé d'une manière ou d'une autre ou se comprend d'évidence du contexte.

Les fonctions que doivent assurer, les exigences que doivent remplir, les performances que doivent satisfaire, et les caractéristiques générales que doivent présenter les semelles pour traverses et les traverses en béton ou analogue avec semelle, pour rail de matériel roulant et en particulier pour train à grande vitesse, sont connues de l'homme du métier ou lui sont accessibles, qu'elles soient d'ordre technique, industriel, financier ou structurel. Etant implicites, elles ne sont pas décrites davantage.

Selon les réalisations, la traverse 2 est en deux blocs reliés par une entretoise ou elle est monobloc.

D'autre part, comme indiqué, les expressions « semelle pour traverse en béton [ou analogue] pour rail de matériel roulant » et « semelle sous traverse » doivent être comprises comme visant ce cas spécifique et le cas d'applications autres, telles qu'elles ont été définies précédemment dans le texte.

La traverse avec semelle 2 + 1 comprend d'une part la traverse 2 en béton ou analogue, typiquement s'inscrivant dans une enveloppe de forme générale parallélépipédique, ayant notamment une grande face de solidarisation 5 et une grande face de support 6, ces deux grandes faces 5 et 6 étant opposées l'une à l'autre, et un chant périphérique.

La traverse avec semelle 2 + 1 comprend d'autre part la semelle 1 en matériau polymère, en particulier mais de façon non limitative du polyuréthane adapté à l'usage, comprenant la paroi de support 3, en forme générale de nappe dont l'épaisseur peut être de quelques millimètres, cette valeur étant donnée à titre exemplatif, sans être limitative, ayant notamment la face de solidarisation 4 et une face d'appui 7, ces deux faces étant opposées l'une à l'autre, et un chant périphérique.

L'on entend par « face de solidarisation 4 » de la semelle 1 et par « face de solidarisation 5 » de la traverse 2, les deux faces respectivement de la semelle 1 et de la traverse 2 qui sont destinées à coopérer structurellement - directement entre elles - et fonctionnellement pour assurer un accrochage rigide semelle 1 - traverse 2, endogène à la paroi de support 3 de la semelle 1 du côté de sa face de solidarisation 4 et à la traverse 2, du côté de sa face de solidarisation 5, de sorte que la traverse avec semelle 2 + 1 forme un ensemble rigide indissociable, notamment stockable, transportable, manipulable et mis en oeuvre comme tel.

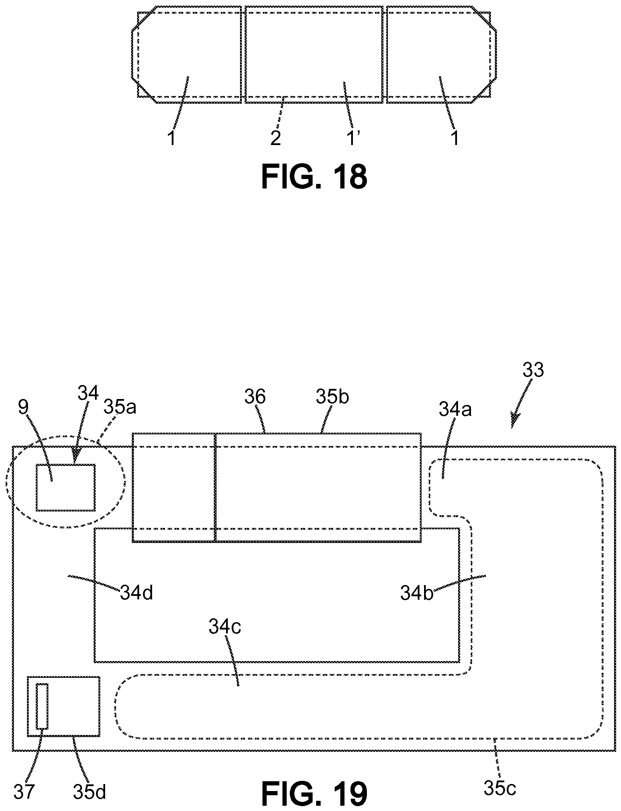

Dans une réalisation, la face de solidarisation 4 de la semelle 1 et la face de solidarisation 5 de la traverse 2 ont des dimensions analogues ou voisines, la semelle 1 recouvrant en totalité ou presque en totalité (avec un petit débordement ou retrait périphérique) la traverse 2. Par exemple, la face de solidarisation 4 et la face de solidarisation 5 ont une longueur pouvant être comprise entre de l'ordre de 30 cm et 2,50 m et une largeur pouvant être comprise entre de l'ordre de 20 cm à 30 cm. Ces valeurs ne sont données qu'à titre purement illustratif et nullement limitatif. En variante, la face de solidarisation 5 de la traverse 2 pourrait être nettement plus longue que la face de solidarisation 4 de la semelle 1, par exemple entre 2 et 3 fois plus longue. Dans un tel cas, la traverse 2 est recouverte en totalité par plusieurs semelles 1 juxtaposées dans le sens de la longueur. Dans un exemple de réalisation, on prévoit deux semelles identiques et disposées symétriquement l'une par rapport à l'autre par rapport à un plan transverse, et une semelle de jonction 1' s'étendant entre ces deux semelles et juxtaposées à celles-ci dans le sens de la longueur. Une telle réalisation est par exemple montrée sur la figure 18.

L'on entend par « face de support 6 », la face de la traverse 2 qui est destinée à coopérer avec le rail, directement ou indirectement et l'on entend par « face d'appui » 7, la face de la semelle 1 destinée à reposer sur le ballast, ou la structure du sol, ou analogue.

Dans une réalisation typique, les faces 4, 5, 6 et 7 sont d'une manière générale - c'est-à-dire globalement - planes ou sensiblement planes ou substantiellement planes et de contour polygonal, par exemple rectangulaire.

Lorsque la traverse avec semelle 1 + 2 est en situation sur le ballast de sorte à supporter un rail de matériel roulant, les faces 7, 4, 5, et 6 sont disposées de façon générale sensiblement horizontalement, à l'aplomb les unes des autres, de bas en haut, la face la plus basse étant la face d'appui 7, la face la plus haute étant la face de support 6 et les deux faces de solidarisation 4 et 5 étant placées en position intermédiaire et plus ou moins sensiblement confondues, aux épaisseurs près.

La face de solidarisation 4 de la semelle 1 est pourvue d'une distribution d'éléments de reliefs d'accrochage 8, aptes, lorsque la semelle 1 est dans sa configuration générale finale et à l'état solide, à être inclus dans la face de solidarisation 5 de la traverse 2.

Par « configuration générale finale », s'agissant de la semelle 1, l'on entend la forme extérieure et l'aspect général que présente la semelle 1 lorsqu'elle est prête à être associée, ou lorsqu'elle est associée, à la traverse 2. Par « état solide », s'agissant de la semelle 1, l'on entend l'état de rigidité qu'à la semelle 1 lorsqu'elle est prête à être associée, ou lorsqu'elle est associée, à la traverse 2.

Par « inclus », s'agissant des reliefs d'accrochage 8, l'on entend que, le béton ou analogue de la traverse 2 une fois ayant pris en masse et alors que la semelle 2 coopère avec la traverse 1, vient emprisonner les éléments de reliefs d'accrochage 8, ce qui réalise l'accrochage semelle 1 - traverse 2 et ainsi leur solidarisation mutuelle rigide.

Les reliefs d'accrochage 8 peuvent être qualifiés d'«endogènes » dans la mesure où l'accrochage et la solidarisation semelle 1 - traverse 2 résultent de la structure même de la semelle 1 et de celle de la traverse 2, celle-ci étant conditionnée par celle-là, sans la nécessité de prévoir des moyens supplémentaires distincts de la semelle 1 et de la traverse 2 en soi, tels que de la colle ou un matelas d'organes de liaison tels que cela est connu avec le second type de semelles sous traverses et de traverses de l'état de la technique, qui a été exposé dans la partie introductive.

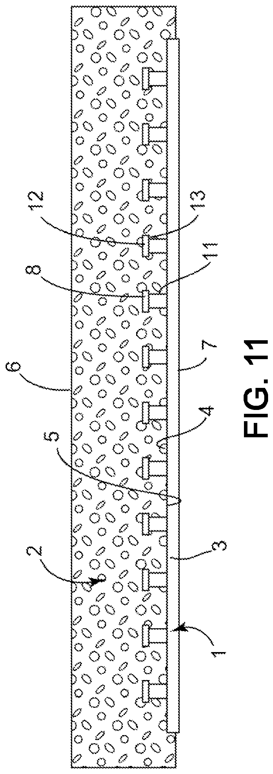

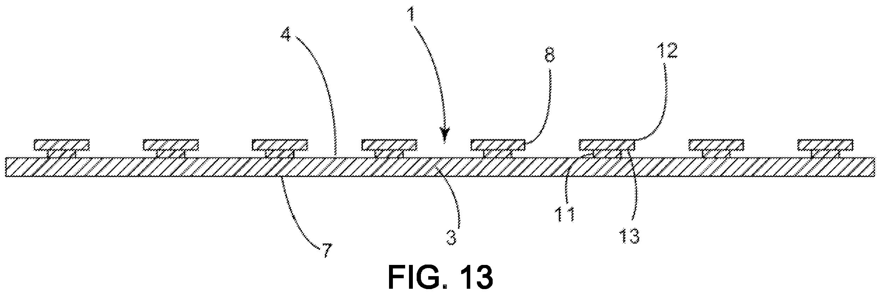

Par « distribution », s'agissant des éléments de reliefs d'accrochage 8, l'on entend qu'il est prévu plusieurs éléments de reliefs d'accrochage 8, et notamment un nombre substantiel, et que ces éléments de reliefs d'accrochage 8 sont, d'une manière générale - c'est-à-dire globalement -, répartis sur la face de solidarisation 4, ou une partie substantielle de la face de solidarisation 4, c'est-à-dire que les éléments de reliefs d'accrochage 8 se trouvent en plusieurs localisations réparties sur la face de solidarisation 4, et notamment un nombre substantiel de localisations, comme cela est illustré en particulier sur les figures 11 à 15.

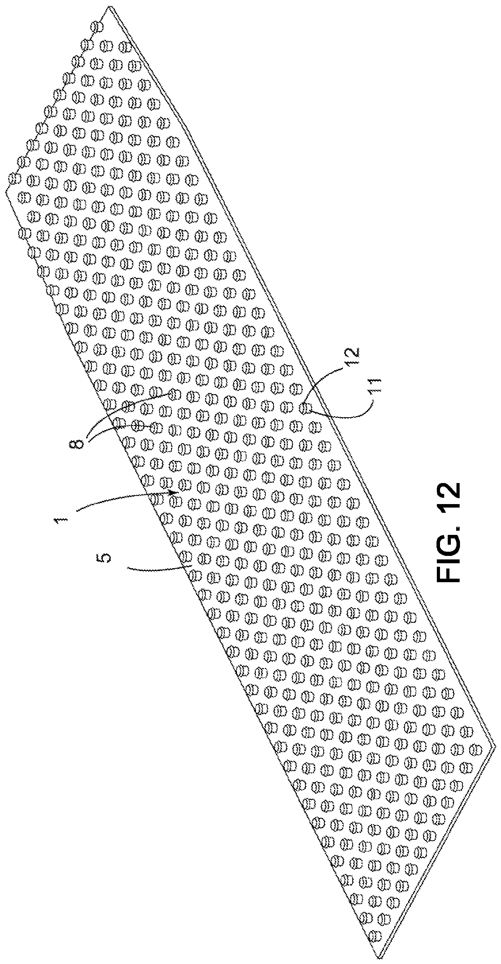

Les caractéristiques de la distribution des éléments de reliefs d'accrochage 8 sont déterminées par l'homme du métier en fonction de la solidarisation souhaitée. Ainsi, la répartition de la distribution peut être régulière, répétitive à l'identique, et homogène comme représenté sur la figure 12 ou, au contraire, irrégulière et hétérogène, par exemple plus dense dans certaines zones de la face de solidarisation 4, et moins dense dans d'autres.

Bien que par « distribution d'éléments de reliefs d'accrochage 8 », l'on entende le plus souvent des éléments de reliefs d'accrochage 8 identiques, il est possibles que les éléments de reliefs d'accrochage 8 ne soient pas parfaitement identiques, mais seulement analogue, voire appartiennent à plusieurs types différents de forme et/ou dimensions.

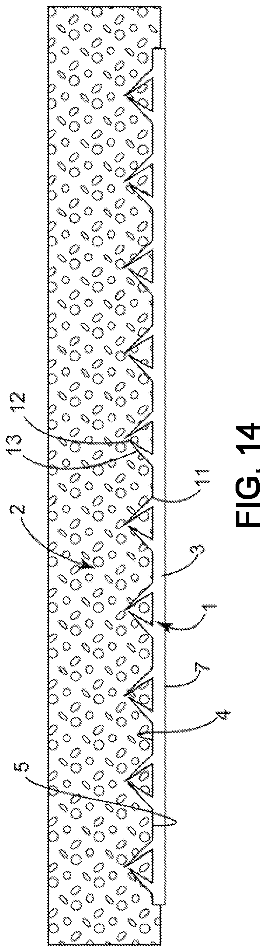

Par « élément de relief » d'accrochage 8, l'on entend tout à la fois un relief d'accrochage qui, soit est unitaire étant individualisé en tant que tel et disposé à côté d'autres reliefs, soit est pluriel étant alors la combinaison de plusieurs reliefs élémentaires. De tels reliefs unitaires sont représentés par exemple sur les figures 11 à 13, alors que de tels reliefs pluriels sont représentés sur la figure 14, chaque relief étant la combinaison de deux reliefs élémentaires, chacun de forme triangulaire aplatie, les deux reliefs étant inclinés l'un vers l'autre vers leurs pointes.

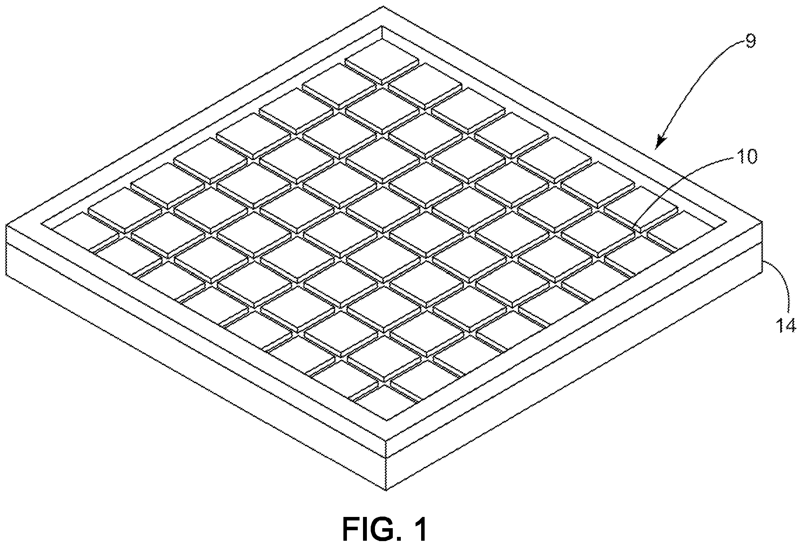

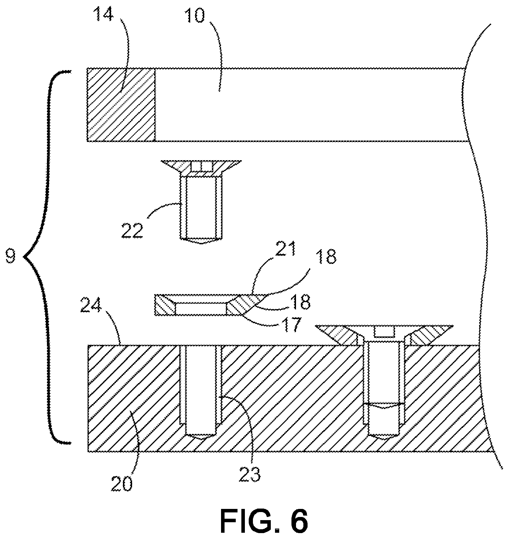

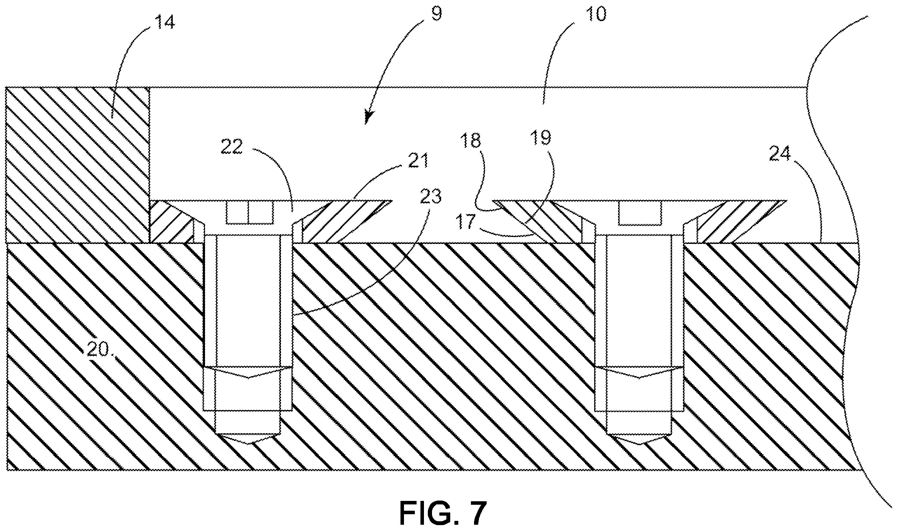

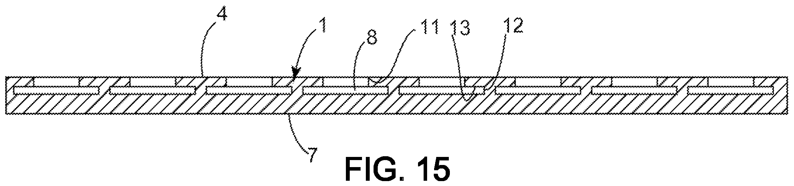

Les éléments de reliefs d'accrochage 8 peuvent être des creux comme représenté en ce qui concerne la semelle 1 sur la figure 15 et comme cela résulte de la conformation du moyen de moulage de plaque de semelle 9, et plus précisément de la conformation de sa cavité de moulage de semelle 10, comme illustré par les deux réalisations représentées respectivement par les figures 1 à 3 et 5 à 7.

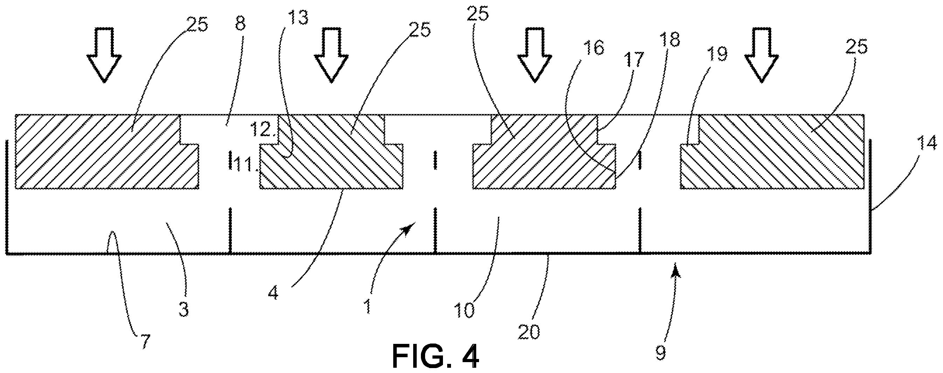

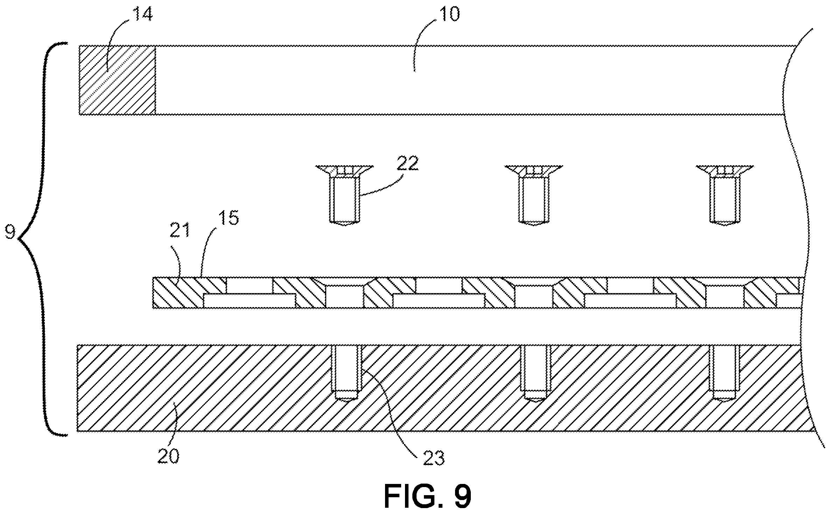

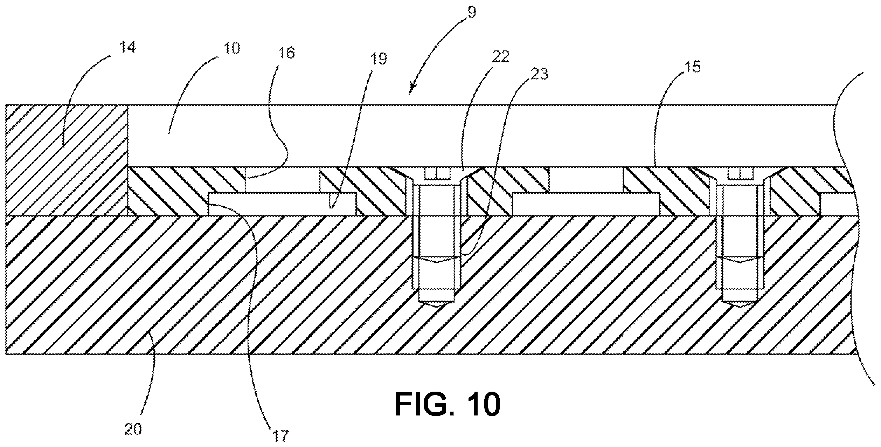

Les éléments de reliefs d'accrochage 8 peuvent être des saillies comme représenté en ce qui concerne la semelle 1 sur les figures 11 à 14 et comme cela résulte de la conformation du moyen de moulage de plaque de semelle 9, et de sa cavité de moulage 10, comme illustré par les deux réalisations représentées respectivement par les figures 4, et 8 à 10.

Dans une autre réalisation, les éléments de reliefs d'accrochage 8 comprennent des creux et des saillies.

Les termes « creux » et « saillie », s'agissant d'un élément de relief d'accrochage 8, s'entendent relativement à la face de solidarisation 4 de la semelle 1, laquelle est d'une manière générale - c'est-à-dire globalement - plate, sans creux ou saillie prononcé autre précisément que les éléments de reliefs d'accrochage 8.

Avec des éléments de reliefs d'accrochage 8 en creux, le terme « inclus », signifie que le béton ou analogue de la traverse 2 vient se placer dans le creux des éléments de reliefs 8. Avec des éléments de reliefs d'accrochage 8 en saillie, le terme « inclus », signifie que le béton ou analogue de la traverse 2 vient se placer autour de la saillie des éléments de reliefs 8. Dans tous les cas, en dehors des éléments de reliefs d'accrochage 8, c'est-à-dire à côté et entre les éléments de reliefs d'accrochage 8, la face de solidarisation 4 de la semelle 1 est destinée à venir contre la face de solidarisation 5 de la traverse 2, de sorte que la paroi de support 3 de la semelle 1 n'est pas incluse ou pas totalement incluse dans le béton ou analogue de la traverse 2, et que la face d'appui 7 de la semelle 1 soit laissée libre pour former la face d'appui de la traverse avec semelle 2 + 1.

Lorsque, localement, la paroi de support 3 de la semelle n'est pas incluse dans le béton de la traverse 2, cet espacement peut être configuré comme un canal d'évent permettant de conduire l'air hors de l'espace entre la traverse 2 et la semelle 1 lors de l'assemblage de la traverse 2 et de la semelle 1. Un ou plusieurs canaux d'évents courent dans le plan de la face de solidarisation 4 de la semelle 1 jusqu'à un bord périphérique latéral de la semelle 1. Ces canaux sont définis par les deux faces de solidarisation 4 et 5 planes en regard. Si nécessaire, on peut amplifier ce phénomène en creusant dans la face de solidarisation 4 de la semelle des canaux longitudinaux s'étendant entre des rangées de reliefs d'accrochage 8 adjacentes. La forme et la disposition des canaux peuvent être réalisées selon différentes variantes. En variante ou en complément, des canaux 27 sont réalisés de manière analogue dans la face de solidarisation 5 de la traverse 2.

Une variante alternative ou complémentaire de réalisation d'un tel évent peut être de prévoir localement des ouvertures traversantes 28 s'étendant dans l'épaisseur de la semelle 1, de sa face de solidarisation 4 à sa face d'appui 7. La forme et la disposition de ces ouvertures traversantes peuvent varier.

Le béton ou analogue de la traverse 2 vient se placer dans le creux ou autour de la saillie des éléments de reliefs 8 d'abord alors que le béton ou analogue est à l'état fluide, n'étant pas encore pris en masse et ensuite une fois le béton ou analogue pris en masse et à l'état rigide. Par conséquent la traverse 2 de la traverse avec semelle 2 + 1 comporte des éléments de reliefs d'accrochage complémentaires des éléments de reliefs d'accrochage 8, ce qui assure l'accrochage semelle 1 - traverse 2 et leur solidarisation mutuelle rigide.

Selon une réalisation, un élément de relief d'accrochage 8 - unitaire ou pluriel, en creux ou en saillie - est ponctuel avec un encombrement plus ou moins important, comme représenté en ce qui concerne la semelle 1 sur les figures 11 à 14 et comme cela résulte de la conformation du moyen de moulage de plaque de semelle 9, et de sa cavité de moulage 10, comme illustré par les figures 1 à 3, et 8 à 10. Selon une autre réalisation, l'élément de relief d'accrochage 8 est allongé ou disposé le long d'une ligne rectiligne ou courbe comme cela résulte de la conformation du moyen de moulage de plaque de semelle 9, et de sa cavité de moulage 10, comme illustré par les figures 4 à 7. Selon une autre réalisation, un élément de relief d'accrochage 8 est à la fois ponctuel et allongé.

Un élément de relief d'accrochage 8 - unitaire ou pluriel, en creux ou en saillie - comprend une partie rétrécie proximale 11, une partie élargie distale 12, et une ou plusieurs facettes 13 s'étendant parallèlement à, ou de façon inclinée par rapport à, la face de solidarisation 4. Par « proximal » et « distal », l'on entend ce qui est, respectivement, plus proche, en particulier attenant, et plus éloigné, en particulier le plus éloigné, de la face de solidarisation 4.

Dans une réalisation donnée à titre exemplatif, et nullement limitative, la partie élargie 12 et la partie rétrécie 11 ont des diamètres (comptés parallèlement au plan de la paroi de support 3) dans un rapport au moins égal à 1,25, plus particulièrement au moins égal à 2, plus particulièrement au moins égal à 3 et au plus égal à 4.

Selon différentes réalisations possibles, un élément de relief d'accrochage 8 - unitaire ou pluriel, en creux ou en saillie - a en coupe longitudinale (orthogonalement ou sensiblement orthogonalement à la paroi de support 3) une forme générale de T, de V, de U à branches inclinées, ou de pseudo T, V, U à branches inclinées, ou une forme s'inscrivant dans une enveloppe forme générale de T, V, U à branches inclinées, ou de pseudo T, V, U à branches inclinées. Il s'entend que les T, V, U et de pseudo T, V, U sont droits ou renversés. Avec les réalisations des figures, la forme de l'élément de relief d'accrochage 8 unitaire, en creux ou en saillie, s'apparente à un T ou T renversé, sauf en ce qui concerne la figure 14 où l'élément de relief d'accrochage 8 est pluriel, en saillie, et s'apparente à un V ou V renversé.

Selon une réalisation, la semelle 1 est pleine ou substantiellement pleine et dépourvue de cavité interne.
Selon une réalisation, la semelle 1 est unitaire, étant réalisée avec une seule matière polymérique.

Selon une autre réalisation, la semelle 1 inclut un moyen de rigidification présentant une certaine rigidité et/ou un moyen d'absorption des contraintes d'écrasement présentant une certaine élasticité. Ce moyen peut être par exemple une plaque, une couche, un treillis, des inserts, des broyats dispersés ou liés, une mousse, ou analogue. En particulier, ce moyen est localisé dans la paroi de support 3 de la semelle 1, et non dans les éléments de reliefs d'accrochage 8.

Comme expliqué ci-dessus, dans un mode de réalisation, on peut viser à recouvrir la traverse 2 avec la semelle 1. En particulier, on peut prévoir un ou plus bord périphérique 30 de la semelle 1 permettant un maintien latéral de la semelle 1 sur la traverse 2. Le bord périphérique 30 peut être réalisé sous la forme d'un rebord continu 31 dépassant de la face de solidarisation 4 sensiblement de manière distale. Le rebord continu 31 peut par exemple comprendre en son extrémité distale une lèvre 32 rentrante, dirigée vers le centre de la traverse 2.

L'invention vise les caractéristiques de la semelle 1 qui viennent d'être décrites, d'une part en tant que telles, comme caractéristiques de la semelle sous traverse 1 et d'autre part dans leur mise en oeuvre, comme caractéristiques du procédé de fabrication de semelle sous traverse 1.

Pour fabriquer une traverse en béton ou analogue pourvue d'une semelle sous traverse 2 + 1, telle qu'elle vient d'être décrite, l'on dispose tout d'abord d'un moyen de moulage de traverse, rigide, formant une cavité de moulage dont la forme est en correspondance avec celle de la traverse 2 à fabriquer et qui est apte à être emplie du béton ou analogue formant la traverse 2.

L'on dispose également de béton ou analogue,

Et l'on dispose d'une semelle fabriquée par le procédé qui sera décrit par la suite.

Puis, l'on emplit la cavité de moulage du moyen de moulage de traverse avec le béton ou analogue à l'état fluide.

Puis, alors que le béton ou analogue n'est pas encore pris en masse, l'on dépose sur la face de solidarisation 5 de la traverse 2, une semelle 1 dans sa configuration générale finale, de sorte que ses éléments de reliefs d'accrochage 8 soient inclus dans la face de solidarisation 5 de la traverse 2 et que la paroi de support 3 de la semelle 1 ne soit pas incluse ou pas totalement incluse dans la face de solidarisation 5 de la traverse 2. Au cours de cette opération, l'air emprisonné entre la semelle 1 et la traverse 2 peut s'échapper par les ouvertures d'évents 26, 27, 28. Si elles sont prévues, les lèvres 32 sont inclues dans les faces latérales de la traverse 2. Ainsi, comme précédemment indiqué, la face d'appui 7 de la semelle 1 est laissée libre de sorte à former la face d'appui de la traverse pourvue de la semelle sous traverse 2 + 1,

C'est ainsi qu'au moyen des éléments de reliefs d'accrochage 8 de la semelle 1, l'on constitue les éléments de reliefs d'accrochage complémentaires de la traverse 2 de l'ensemble comprenant la traverse 2 et la semelle 1.

Puis, l'on laisse le béton ou analogue de la traverse 2 prendre en masse, de sorte que la semelle sous traverse 1 fasse ainsi partie intégrante de la traverse 2 + 1.

Dans ce procédé et selon une réalisation, l'on dispose le moyen de moulage de traverse de façon générale horizontale et l'on dépose la semelle 1 par-dessus la face de solidarisation 5 de la traverse 2 laissée accessible en position supérieure.

Selon une réalisation, lors du moulage de la traverse 2 dans la cavité de moulage du moyen de moulage de traverse, l'on fait vibrer le moyen de moulage de traverse.

Egalement selon une réalisation, alors que le béton ou analogue de la traverse 2 n'est pas encore pris en masse, et lorsque l'on dépose la semelle 1 sur la face de solidarisation 5 de la traverse 2, l'on effectue de petits déplacements de la semelle 1 par rapport au béton ou analogue de la traverse 2, de sorte à assurer un positionnement correct de la semelle 1 par rapport à la traverse 2 et une coopération intime des éléments de reliefs d'accrochage 8 de la semelle 1 et des éléments de reliefs d'accrochage complémentaires de la traverse 2 de l'ensemble comprenant la traverse 2 et la semelle 1. Ces petits déplacements peuvent être dans la direction du plan de la paroi de support 3 et/pu orthogonaux à ce plan. Ces petits déplacements peuvent consister en une pression d'inclusion propre à forcer l'inclusion des éléments de reliefs d'accrochage 8 dans le béton ou analogue de la traverse 2, la face de solidarisation 4 de la semelle 1 étant appliquée contre la face de solidarisation 5 de la traverse sans pénétrer du moins substantiellement dans le béton ou analogue, comme il a été indiqué.

Il peut être envisagé une autre réalisation du procédé de fabrication de traverse avec semelle 2 + 1 qui est un équivalent du procédé qui vient d'être décrit, et dans lequel au lieu de la séquence emplissage du béton ou analogue / dépose de la traverse 2 sur la face de solidarisation 5 / prise en masse du béton ou analogue, l'on a la séquence dépose de la traverse 2 dans le moyen de moulage de traverse / emplissage du béton ou analogue / prise en masse du béton ou analogue.

On peut par exemple prévoir une forme des reliefs d'accrochage 8 qui favorise leur pénétration dans le béton ou analogue de la traverse 2. A titre d'exemple, la partie élargie distale 12, tout en restant plus large que la partie rétrécie proximale 11, présente une tête 29 conique pointant en s'éloignant de la face de solidarisation 4.

Pour fabriquer une semelle sous traverse 1, telle qu'elle a été décrite précédemment, l'on dispose tout d'abord d'un moyen de moulage de plaque de semelle 9, qui fait également partie de l'invention et qui est spécialement destiné à la mise en oeuvre du procédé de fabrication de semelle 1.

Le moyen de moulage de plaque de semelle 9 présente une certaine rigidité. Par exemple, on prévoit un moyen de moulage de plaque de semelle 9 rigide indéformable, par exemple métallique, apte à supporter les températures de moulage de la semelle 1 sans se déformer. En variante, on prévoit de réaliser le moyen de moulage de plaque de semelle 9 dans un matériau déformable. Plus précisément, ce matériau n'est pas plastiquement déformable (et très peu élastiquement déformable) sous l'effet de la température appliquée par le matériau à mouler, mais est élastiquement déformable (sans être déformé plastiquement) lors du démoulage de la semelle 1. On choisit par exemple un matériau élastomère, par exemple polyuréthane, ou silicone, tant que ceux-ci supportent les températures évoquées au cours d'un nombre suffisant de cycles de moulage.

Le moyen de moulage de plaque de semelle 9 a une paroi latérale périphérique 14 et une face de conformation de moulage 15 comportant une distribution d'éléments de reliefs de moulage 16. La paroi latérale périphérique 14 et la face de conformation de moulage 15 délimitent en formant la cavité de moulage 10. La forme de la cavité de moulage 10 est en correspondance - de façon complémentaire - avec celle de la semelle 1 à réaliser, en particulier la distribution des éléments de reliefs de moulage 16 est en correspondance - de façon complémentaire - avec la distribution des éléments de reliefs d'accrochage 8 (cette correspondance s'entend moyennant un léger retrait de la pièce démoulée lors de son refroidissement, comme bien connu de l'homme de l'art). Cette cavité de moulage 1 est apte à être emplie de la matière constitutive de la semelle 1 en vue de son moulage.

La périphérie de la cavité de moulage 10 est également réalisée en correspondance du bord périphérique 30 de la semelle 1. Un rebord continu 31 peut être prévu pour s'étendre sur toute la longueur de trois des quatre côtés de la semelle 1. En effet, le bord périphérique 30 d'un quatrième côté de la semelle 1 peut ne pas présenter un tel rebord. Ce côté sera choisi comme site d'initiation du démoulage.

Selon les cas, avec le moyen de moulage de plaque de semelle 9, soit l'on fabrique une semelle 1 individualisée soit l'on fabrique plusieurs semelles 1 en même temps, ces plusieurs semelles formant un ensemble conventionnellement dénommé « plaque de semelle » et, en fin de procédé de fabrication, l'on individualise les semelles 1, moyennant une coupe transversale de la plaque de semelle. Par « plaque de semelle », l'on entend à la fois une plaque qui constitue une seule semelle ou une plaque dans laquelle sont individualisées plusieurs semelles. Visant ces deux possibilités, l'expression « plaque de semelle » doit se comprendre comme signifiant plaque de semelle d'au moins une semelle. Pour ces raisons la plaque de semelle porte la même référence numérique que la semelle, soit la référence 1. Ainsi, le côté de chaque semelle 1 ne comportant pas de rebord continu 31 peut être utilisé pour juxtaposition avec une autre semelle 1, notamment avec un côté identique d'une autre semelle. Les trois autres côtés recouvrent les flans latéraux de la traverse 2.

Selon les réalisations, d'une part, le moyen de moulage de plaque de semelle 9 est soit un moule ouvert soit un moule fermé. D'autre part, le moyen de moulage de plaque de semelle 9 est soit avec insert de constitution des éléments de reliefs de moulage 16 soit sans insert, les éléments de reliefs de moulage 16 étant réalisés directement dans l'une des parois du moyen de moulage de plaque de semelle 9.

De façon générale, tout ce qui a été dit à propos des éléments de reliefs d'accrochage 8, notamment en ce qui concerne leur forme, réalisation et disposition, peut être transposé au moyen de moulage de plaque de semelle 9, puisque la distribution des éléments de reliefs de moulage 16 est en correspondance - de façon complémentaire - avec la distribution des éléments de reliefs d'accrochage 8.

Par « distribution », s'agissant des éléments de reliefs de moulage 16, l'on entend qu'il est prévu plusieurs éléments de reliefs de moulage 16 et que ces éléments de reliefs de moulage 16 sont répartis en plusieurs localisations.

Les caractéristiques de la distribution des éléments de reliefs de moulage 16 sont déterminées à partir et en fonction de celles des éléments de reliefs d'accrochage 8. Ainsi, la répartition des éléments de reliefs de moulage 16 peut être régulière, répétitive à l'identique, et homogène ou, au contraire, irrégulière et hétérogène.

Selon différentes réalisations, les éléments de reliefs de moulage 16 sont identiques ou ne sont pas parfaitement identiques, mais seulement analogues, ou appartiennent à plusieurs types différents de forme et/ou dimensions.

Par « élément de relief » de moulage 16, l'on entend tout à la fois un relief de moulage qui, soit est unitaire étant individualisé en tant que tel et disposé à côté d'autres reliefs, soit est pluriel étant alors la combinaison de plusieurs reliefs élémentaires.

Les éléments de reliefs de moulage 16 peuvent être des creux comme représenté sur les figures 1 à 3 et 5 à 7 ou des saillies comme représenté sur les figures 4, et 8 à 10. Dans une autre réalisation, les éléments de reliefs de moulage 16 comprennent des creux et des saillies. Les termes « creux » et « saillie », s'agissant d'un élément de relief de moulage 16, s'entendent relativement à la face de conformation de moulage 15 qui, d'une manière générale - c'est-à-dire globalement - plate, sans creux ou saillie prononcé autre précisément que les éléments de reliefs de moulage 16.

Selon une réalisation, un élément de relief de moulage 16 - unitaire ou pluriel, en creux ou en saillie - est ponctuel avec un encombrement plus ou moins important, comme illustré par les figures 1 à 3, et 8 à 10. Selon une autre réalisation, l'élément de relief de moulage 16 est allongé ou disposé le long d'une ligne rectiligne ou courbe comme illustré par les figures 4 à 7. Selon une autre réalisation, un élément de relief de moulage 16 est à la fois ponctuel et allongé. Selon encore une autre réalisation, un élément de relief de moulage 16 est unique et s'étend de manière continue sensiblement selon une grille entourant chaque élément de relief d'accrochage 8 individuel.

Un élément de relief de moulage 16 - unitaire ou pluriel, en creux ou en saillie - comprend une partie rétrécie proximale 17, une partie élargie distale 18, et une ou plusieurs facettes 19 s'étendant parallèlement à, ou de façon inclinée par rapport à, la face de conformation de moulage 15.

Selon différentes réalisations possibles, un élément de relief de moulage 16 - unitaire ou pluriel, en creux ou en saillie - a en coupe longitudinale (orthogonalement ou sensiblement orthogonalement à la face de conformation de moulage 15) une forme générale de T, de V, de U à branches inclinées, ou de pseudo T, V, U à branches inclinées, ou une forme s'inscrivant dans une enveloppe forme générale de T, V, U à branches inclinées, ou de pseudo T, V, U à branches inclinées. Il s'entend que les T, V, U et de pseudo T, V, U sont droits ou renversés.

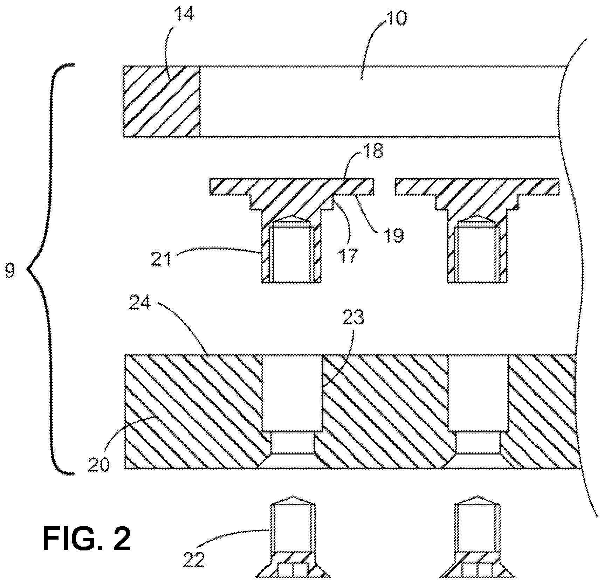

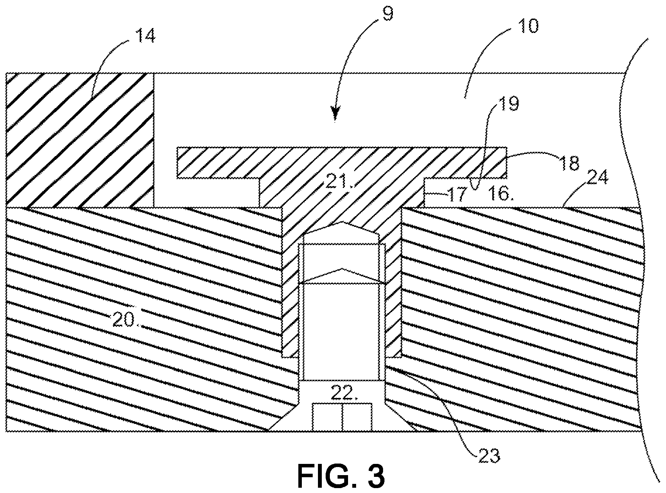

Dans la réalisation des figures 1 à 3, le moyen de moulage de semelle 9 comprend une paroi latérale périphérique 14 formant cadre et un fond 20. Des inserts 21, ponctuels, sont fixés sur le fond 20, grâce à des vis 22 associés à des trous taraudés 23 prévus dans le fond 20. Dans cette réalisation, les vis 22 sont mises en place depuis l'extérieur de la cavité 10, les trous taraudés 23 étant débouchants. Les inserts 21 ont une forme extérieure en T. Les éléments constitutifs du moyen de moulage de semelle 9 sont représentés dissociés en figure 2. Ils sont représentés associés en figure 3. Celle-ci permet de visualiser les reliefs de moulage 16, ici des creux, formés par la face périphérique des inserts 21, ces creux s'entendant relativement à la face frontale 24 du fond 20 d'où saillent les inserts 21 qui forme ici la face de conformation de moulage 15. Globalement, les reliefs en creux 16 ont une forme de T, de sorte que les reliefs d'accrochage en saillie 8 de la semelle 1, ponctuels, sont en saillie et ont une forme de T, également.

Dans la réalisation de la figure 4, le moyen de moulage de semelle 9 comprend une paroi latérale périphérique 14 formant cadre et un fond 20 délimitant et constituant la cavité de moulage 10. Une fois celle-ci emplie avec le matériau polymère à l'état fluide, on applique sur la face de la matière polymère opposée au fond qui constituera la face de solidarisation 4 de la semelle 1, des inserts de conformation, conformés pour réaliser les reliefs de moulage 16, que l'on enfonce dans la matière polymère (voir les flèches) de sorte à faire pénétrer la matière polymère dans les reliefs de moulage en creux 16, ce qui permet de réaliser une semelle 1 ayant des reliefs d'accrochage en saillie 8.

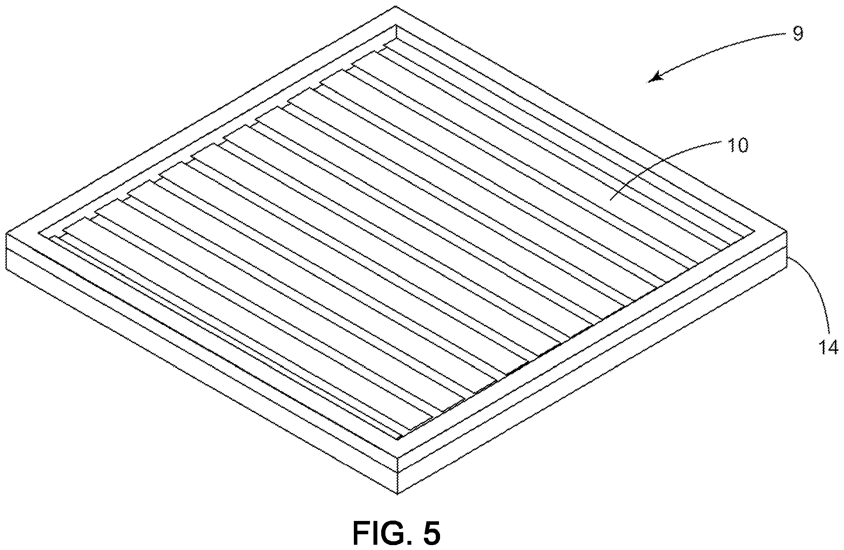

La réalisation des figures 5 à 7 est une variante de celle des figures 1 à 3. Ici, les inserts 21 sont rectilignes et sont fixés sur le fond 20, grâce à des vis 22 associés à des trous taraudés 23 prévus dans le fond 20, mais borgnes, les vis 22 étant mises en place depuis l'intérieur de la cavité 10. Ici, les inserts 21 ont une forme extérieure trapézoïdale. Avec cette réalisation, les reliefs en creux 16 ont une forme de U à branches divergentes, de sorte que les reliefs d'accrochage en saillie 8 de la semelle 1, ponctuels, sont en saillie et ont une forme de U, à branches inclinées.

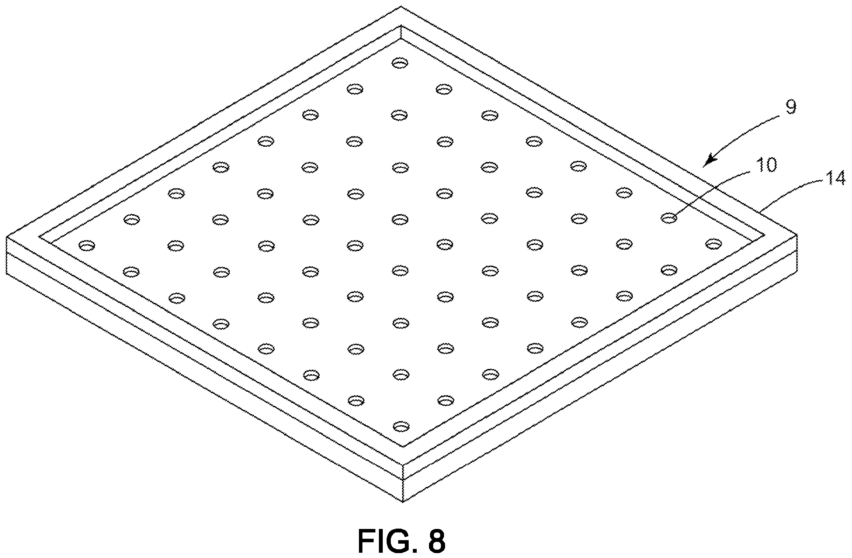

La réalisation des figures 8 à 10 peut être vue comme une variante de celle des figures 1 à 3. Ici, les inserts 21 sont conformés pour former les reliefs 16, la face 15 de conformation étant une face de l'insert 21.

Comme évoqué ci-dessous, le moyen de moulage de plaque de semelle 9 est par exemple réalisé dans un matériau déformable élastiquement, tel qu'un élastomère. Dans un tel cas, le moyen de moulage de plaque de semelle 9 est par exemple fabriqué par un procédé de moulage. On prévoit ainsi un moule de fabrication du moyen de moulage de plaque de semelle 9, réalisé dans un matériau rigide, tel qu'un matériau métallique. Ce moule de fabrication comprend une forme correspondant - en étant complémentaire - à la forme du moyen de moulage de plaque de semelle 9. Par conséquent, ce moule de fabrication présente une forme similaire à la plaque de semelle 9.

Ces réalisations sont données à titre exemplatif. D'autres réalisations sont envisageables.

L'invention vise les caractéristiques du moyen de moulage de plaque de semelle 9 qui viennent d'être décrites, d'une part en tant que telles, comme caractéristiques du moyen de moulage de plaque de semelle 9 et d'autre part dans leur mise en oeuvre, comme caractéristiques du procédé de fabrication de semelle sous traverse 1.

Pour fabriquer une semelle sous traverse 1, l'on dispose par ailleurs de matière polymérique, en particulier d'élastomère de polyuréthane thermodurcissable, apte à être amenée, d'abord, dans un état fluide en vue de son moulage, par ailleurs dans un état solide en vue notamment d'associer la semelle 1 démoulée au béton ou analogue de la traverse 2, et enfin dans un état déformable où la matière polymérique présente une certaine capacité de déformation locale temporaire au moins sensiblement élastique. L'on amène la matière polymérique à l'état déformable ou à l'état solide, par un processus thermique.

Disposant du moyen de moulage de plaque de semelle 9 et de la matière polymérique sélectionnée et adaptée, le procédé de fabrication de semelle 1 est tel que l'on amène la matière polymérique à l'état fluide et que l'on en emplit la cavité de moulage 10 du moyen de moulage de plaque de semelle 9, en vue du moulage de la plaque de semelle.1. En particulier, l'on emplit la cavité de moulage 10 avec une seule matière polymérique de sorte à réaliser une semelle sous traverse 1 unitaire.

Dans une réalisation, lorsque l'on moule la plaque de semelle 1 dans le moyen de moulage de plaque de semelle 9, la face d'appui 7 est libre ou moulée sans éléments de reliefs.

Dans une réalisation, lors du moulage de la plaque de semelle 1 dans la cavité de moulage 10, l'on fait vibrer le moyen de moulage de plaque de semelle 9, en vue d'un bon emplissage avec la matière polymérique des parties en creux de la cavité de moulage 10.

Ultérieurement, l'on amène la matière polymérique de la plaque de semelle. 1 à l'état déformable.

Selon l'invention, alors que la matière polymérique est à l'état déformable, l'on exerce sur la plaque de semelle 1 préalablement moulée, par rapport au moyen de moulage de plaque de semelle 9, une force relative d'extraction telle que l'on déforme élastiquement et temporairement ses éléments de reliefs d'accrochage 8 dans ledit état déformable, de sorte à les désolidariser des éléments de reliefs de moulage 16, ce qui permet de démouler la plaque de semelle 1. Si, en particulier, le moyen de moulage de plaque de semelle 9 est lui-même réalisé dans un matériau déformable élastiquement, par exemple élastomère, les reliefs de moulage 16 se déforment élastiquement pour favoriser l'extraction des reliefs d'accrochage 8, notamment le passage des passages élargis distaux 12 des reliefs d'accrochage 8 à travers les parties rétrécies proximales 17, plus étroits, des reliefs de moulage 8.

Si nécessaire, il est prévu des trous d'évents, permettant l'introduction d'air, de sorte que le démoulage ne soit pas empêché.

Selon les réalisations, l'on applique la force relative d'extraction sur le moyen de moulage de plaque de semelle 9, en particulier vers sa paroi latérale périphérique 14 et/ou sur la plaque de semelle 1, en particulier vers un bord adjacent à la paroi latérale périphérique 14 du moyen de moulage de plaque de semelle 9.

Lorsque l'on exerce la force relative d'extraction, l'on déforme élastiquement et temporairement les éléments de reliefs d'accrochage 8 et, le cas échéant, la paroi de support 3 de la plaque de semelle 1. Par exemple, l'on l'incurve la paroi de support 3.

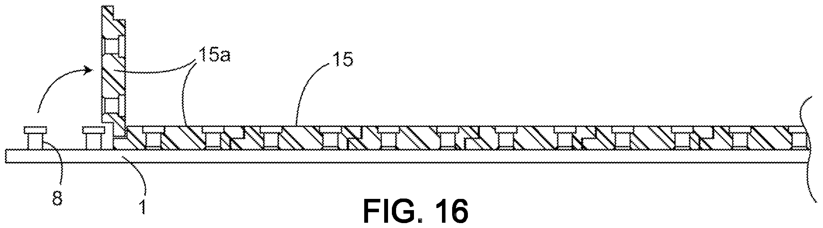

Selon une réalisation, l'on désolidarise les éléments de reliefs d'accrochage 8 des éléments de reliefs de moulage 16, de façon progressive, successivement pour des groupes adjacents d'éléments de reliefs d'accrochage 8, en particulier des groupes d'éléments de reliefs d'accrochage d'étendue localisée et limitée. Par exemple, dans une réalisation illustrée par la figure 16, l'on dispose et l'on met en oeuvre un moyen de moulage de plaque de semelle 9 ayant une face de conformation de moulage 15 comprenant plusieurs parties successives 15a, 15b, en particulier d'étendue localisée et limitée.

Puis, dans le procédé de fabrication, l'on dispose la semelle 1 constituée par ou provenant de la plaque de semelle 1 dans la configuration générale qui est sa configuration générale finale alors que la matière polymérique est dans ledit état solide.

Avec ce procédé de fabrication de semelle 1, l'on peut réaliser de façon aisée, industrielle et économique des semelles sous traverses ayant des éléments de reliefs d'accrochage endogènes 8, du type comprenant une partie rétrécie proximale 11, une partie élargie distale 12, et une ou plusieurs facettes parallèles ou inclinées 13.

Selon une première réalisation possible du procédé, la séquence opératoire est la suivante :
- l'on amène la matière polymérique à l'état fluide et l'on en emplit la cavité de moulage 10,
- puis, l'on amène la matière polymérique à l'état déformable,
- puis, dans cet état déformable, l'on exerce sur la plaque de semelle 1 la force relative d'extraction,
- puis, l'on dispose la semelle 1 dans la configuration générale finale avec la matière polymérique à l'état solide.

Pour cette première réalisation du procédé, la matière polymérique est sélectionnée pour être apte à suivre cette séquence opératoire.

On décrit ci-après une installation de fabrication 33 apte à réaliser des plaques de semelle 1 de manière industrielle. L'installation de fabrication comprend un système de transport 34 continu sans fin. On prévoit par exemple une pluralité de tapis roulants 34a-d chacun mu selon une direction propre, les tapis roulants définissant une trajectoire fermée par exemple polygonale. On définit plusieurs stations de travail le long de cette trajectoire. Une première station est une station initiale 35a dans laquelle est présente un ou plusieurs moyen de moulage de plaque de semelle 9. Une deuxième station est une station de moulage 35b. Une troisième station est une station de refroidissement 35c située en aval de la station de moulage 35b le long de la trajectoire. Une quatrième station est une station de démoulage 35d située en aval de la station de refroidissement 35c le long de la trajectoire.

La station de moulage 35b comprend tout l'équipement nécessaire pour procéder au moulage de la plaque de semelle 1. Elle comprend en particulier un moyen d'amenée en température 36, tel qu'un four définissant une température adéquate dans la station de moulage 35b. Elle comprend en outre des moyens d'emplir la cavité de moulage du moyen de moulage de plaque de semelle 9. La station de moulage 35b est suffisamment longue pour garantir des conditions optimales de diffusion du matériau liquide à l'intérieur de la cavité de moulage du moyen de moulage de plaque de semelle 9.

La station de refroidissement 35c est par exemple située à l'air libre. Elle est suffisamment longue pour que le matériau passe de son état fluide à son état déformable propre au démoulage.

La station de démoulage 35d comprend un moyen apte à désolidariser la semelle 1 du moyen de moulage de plaque de semelle 9. On prévoit par exemple de maintenir le moyen de moulage de plaque de semelle 9 sur le système de transport 34, et un moyen d'appliquer une force d'extraction 37 appliquant une for ce d'extraction à la semelle 1. Par exemple, le moyen d'appliquer une force d'extraction est appliqué en premier lieu sur un bord périphérique de la plaque de semelle 1 ne comprenant pas de lèvre 32.

La semelle démoulée peut ensuite être convoyée vers une station ultérieure de stockage ou traitement ultérieur (conditionnement, etc...). Le moyen de moulage de plaque de semelle 9 est transporté vide en direction de la station initiale 35a.

Selon le mode de réalisation ci-dessus, on prévoit un convoyage sensiblement plan des moyens de moulage de plaque de semelle 9. En variante, on peut prévoir que ceux-ci suivent une trajectoire comprenant deux plans parallèles espacés verticalement, par exemple le long d'un tapis présentant une région de convoyage supérieur 38a et une région de convoyage inférieur 38b parallèle déplacée dans l'autre sens, et des régions de transition arquées 39a et 39b. La région de transition arquée 39a comprend une partie de la station de moulage 35b. En particulier, lorsque le moyen de moulage de plaque de semelle 9 en matériau élastomère est convoyé le long d'une région arquée 39a ou 39b, les ouvertures situées entre les reliefs de moulage 16 sont déformées en étant ouvertes. Ainsi, l'emplissage par le matériau fluide, comme représenté par la flèche 40 est facilité.

La station de démoulage 35c peut être fournie au niveau de la région de transition arquée 39b. En effet, le passage du moyen de moulage de plaque de semelle 9 en matériau élastomère au niveau de la région de transition arquée 39b ouvre les ouvertures situées entre les reliefs de moulage 16. Ainsi, le démoulage, comme représenté par la flèche 41, est facilité.

Selon une seconde réalisation possible du procédé, la séquence opératoire est la suivante :
- l'on amène la matière polymérique à l'état fluide et l'on en emplit la cavité de moulage 10,
- puis l'on amène la matière polymérique à l'état solide,
- puis, l'on amène la matière polymérique audit état déformable,
- puis, dans cet état déformable, l'on exerce sur la plaque de semelle 1 la force relative d'extraction,
- puis, l'on dispose la semelle 1 dans la configuration générale finale avec la matière polymérique à l'état solide.

Pour cette seconde réalisation du procédé, la matière polymérique est sélectionnée pour être apte à suivre cette séquence opératoire.

Dans le cas où la semelle 1 inclut un moyen de rigidification et/ou un moyen d'absorption des contraintes d'écrasement présentant une certaine élasticité, le procédé de fabrication de semelle est tel que lorsque l'on emplit la cavité de moulage 10 avec la matière polymérique, l'on inclut dans la cavité de moulage un ou plusieurs tels moyen solide fonctionnel, en particulier de rigidification et/ou d'absorption des contraintes d'écrasement. Dans un tel cas, l'on inclut le ou les moyens solides fonctionnels dans la cavité de moulage 10 à l'extérieur des reliefs de moulage 16, de sorte que le moyen solide fonctionnel soit noyé dans la paroi de support 3 de la semelle 1 et non dans les éléments de reliefs d'accrochage 8.

## Revendications

1. Procédé de fabrication d'une semelle sous traverse (1) comprenant une paroi de support (3), ayant une face d'appui (7) et à l'opposé une face de solidarisation (4) pourvue d'une distribution d'éléments de reliefs d'accrochage (8) endogènes - creux, saillies -, aptes, la semelle (1) étant dans sa configuration générale finale et à l'état solide, à être inclus dans une face de solidarisation (5) d'une traverse (2) en béton ou analogue ayant à l'opposé une face de support (6), un tel élément de relief d'accrochage (8) comprenant une partie rétrécie proximale (11) vers la face de solidarisation (4), une partie élargie distale (12), et une ou plusieurs facettes (13) s'étendant parallèlement à, ou de façon inclinée par rapport à, la face de solidarisation (4), dans lequel :
- l'on dispose d'un moyen de moulage de plaque de semelle (9) présentant une rigidité, ayant une paroi latérale périphérique (14) et une face de conformation de moulage (15) comportant une distribution d'éléments de reliefs de moulage (16) - saillies, creux -, formant une cavité de moulage (10), apte à être emplie de la matière constitutive de la semelle (1), dont la forme de la cavité de moulage (10) est en correspondance - de façon complémentaire - avec celle de la semelle (1) à réaliser, la distribution d'éléments de reliefs de moulage (16) en correspondance - de façon complémentaire - avec la distribution des éléments de relief d'accrochage (8), un élément de relief de moulage comprenant une partie rétrécie proximale (17), une partie élargie distale (18), et une ou plusieurs facettes (19) s'étendant parallèlement à, ou de façon inclinée par rapport à la face de conformation de moulage (15),
- l'on dispose de matière polymérique, en particulier d'élastomère de polyuréthane thermodurcissable, apte à être amenée:
o d'abord dans un état fluide en vue de son moulage,
o dans un état solide en vue notamment d'associer la semelle (1) démoulée au béton ou analogue de la traverse,
o et dans un état déformable où elle présente une capacité de déformation locale temporaire au moins sensiblement élastique,
- l'on amène la matière polymérique audit état fluide et l'on en emplit la cavité de moulage (10) du moyen de moulage de plaque de semelle (9), en vue du moulage de la plaque de semelle (1),
- ultérieurement, l'on amène la matière polymérique audit état déformable,
- , et, alors que la matière polymérique est à l'état déformable, l'on exerce sur la plaque de semelle (1) préalablement moulée, par rapport au moyen de moulage de plaque de semelle (9), une force relative d'extraction telle que l'on déforme élastiquement et temporairement ses éléments de reliefs d'accrochage (8) dans ledit état déformable, de sorte à les désolidariser des éléments de reliefs de moulage (16), ce qui permet de démouler la plaque de semelle (1),
- puis, l'on dispose la semelle (1) constituée par ou provenant de la plaque de semelle (1) dans la configuration générale qui est sa configuration générale finale alors que la matière polymérique est dans ledit état solide.

2. Procédé de fabrication d'une semelle sous traverse (1) selon la revendication 1, comprenant en outre l'une et/ou l'autre des caractéristiques suivantes :
- lorsque l'on moule la plaque de semelle (1) dans le moyen de moulage de plaque de semelle (9), la face d'appui (7) est libre ou moulée sans éléments de reliefs ;
- l'on amène la matière polymérique audit état déformable et/ou l'on amène la matière polymérique audit état solide, par un processus thermique ;
- l'on dispose d'un moyen de moulage de plaque de semelle (9) comportant une distribution d'éléments de reliefs de moulage (16) dont la forme correspond à une distribution de reliefs d'accrochage (8) de la plaque de semelle (1) telle qu'un tel relief d'accrochage (8) comprend une partie élargie et une partie rétrécie dont les diamètres sont dans un rapport au moins égal à 1,5;
- l'on applique la force relative d'extraction sur le moyen de moulage de plaque de semelle (9), vers sa paroi latérale périphérique (14) et/ou sur la plaque de semelle (1), en particulier vers un bord adjacent à la paroi latérale périphérique (14) du moyen de moulage de plaque de semelle (9) ;
- lorsque l'on exerce la force relative d'extraction, l'on déforme élastiquement et temporairement la paroi de support (3) de la plaque de semelle (1).

3. Procédé de fabrication d'une semelle sous traverse (1) selon l'une quelconque des revendications 1 à 2, **caractérisé par le fait que** l'on désolidarise les éléments de reliefs d'accrochage (8) des éléments de reliefs de moulage (16), de façon progressive, successivement pour des groupes adjacents d'éléments de reliefs d'accrochage (8), en particulier des groupes d'éléments de reliefs d'accrochage (8) d'étendue localisée et limitée,
et **par le fait que**, optionnellement, l'on dispose et l'on met en oeuvre un moyen de moulage de plaque de semelle (9) ayant une face de conformation de moulage (15) comprenant plusieurs parties successives (15a), en particulier des parties de face de conformation de moulage d'étendue localisée et limitée.

4. Procédé de fabrication d'une semelle sous traverse (1) selon l'une quelconque des revendications 1 à 3, **caractérisé par le fait que** l'on met en oeuvre l'une et/ou l'autre des caractéristiques suivantes :
- lorsque l'on emplit la cavité de moulage (10) du moyen de moulage de plaque de semelle (9) avec la matière polymérique, l'on moule la plaque de semelle (1) pleine ou substantiellement pleine et dépourvue de cavité interne ;
- l'on emplit la cavité de moulage (10) du moyen de moulage de plaque de semelle (9) avec une seule matière polymérique de sorte à réaliser une semelle sous traverse (1) unitaire.

5. Procédé de fabrication d'une semelle sous traverse (1) selon l'une quelconque des revendications 1 à 4, **caractérisé par le fait que** lorsque l'on emplit la cavité de moulage (10) du moyen de moulage de plaque de semelle (9) avec la matière polymérique, l'on inclut dans la cavité de moulage (10) au moins un moyen solide fonctionnel, noyé dans la plaque de semelle (1) moulée, choisi parmi un moyen de rigidification et un moyen d'absorption des contraintes d'écrasement;
et optionnellement **par le fait que** lorsque l'on emplit la cavité de moulage (10) du moyen de moulage de plaque de semelle (9) avec la matière polymérique, l'on inclut le ou les moyens solides fonctionnels dans la cavité de moulage (10) à l'extérieur des reliefs de moulage (16), de sorte que le moyen solide fonctionnel soit noyé dans la paroi de support (3) de la semelle (1) et non dans les éléments de reliefs d'accrochage (8).

6. Procédé de fabrication d'une semelle sous traverse (1) selon l'une quelconque des revendications 1 à 5, **caractérisé par le fait que** l'on met en oeuvre au moins une des caractéristiques suivantes :
- lors du moulage de la plaque de semelle (1) dans la cavité de moulage (10) du moyen de moulage de plaque de semelle (9), l'on fait vibrer le moyen de moulage de plaque de semelle (9), en vue de l'emplissage avec la matière polymérique des parties en creux de la cavité de moulage (10) ;
- soit l'on moule la plaque de semelle (1) constituant une semelle sous traverse (1) individualisée soit l'on moule la plaque de semelle (1) à partir de laquelle l'on individualise au moins une semelle sous traverse (1), moyennant une coupe transversale de la plaque de semelle (1) ;
- l'on dispose d'un moyen de moulage de plaque de semelle (9) dont la face de conformation de moulage (15) comporte une distribution d'éléments de reliefs de moulage (16) allongés et/ou ponctuels, et l'on réalise une semelle (1) comportant une distribution d'éléments de reliefs d'accrochage (8) allongés et/ou ponctuels ;
- l'on dispose d'un moyen de moulage de plaque de semelle (9) dont la face de conformation de moulage (15) comporte une distribution, régulière ou irrégulière, d'éléments de reliefs de moulage (16) identiques ou analogues, et l'on réalise une semelle (1) comportant une distribution, régulière ou irrégulière, d'éléments de reliefs d'accrochage (8) identiques ou analogues ;
- l'on dispose d'un moyen de moulage de plaque de semelle (9) dont la face de conformation de moulage (15) comporte une distribution d'éléments de reliefs de moulage (16) ayant en coupe longitudinale une forme générale de T, V, U à branches inclinées, ou de pseudo T, V, U à branches inclinées, ou s'inscrivant dans une enveloppe forme générale de T, de V, de U à branches inclinées, ou de pseudo T, V, U à branches inclinées, et l'on réalise une semelle (1) comportant une distribution d'éléments de reliefs d'accrochage (8) ayant une forme en correspondance ;
- l'on sélectionne le polyuréthane comme matière polymérique.
- le moyen de moulage de plaque de semelle (9) est réalisé dans un matériau déformable élastiquement, en particulier élastomère, lorsqu'on démoule la plaque de semelle (1).

7. Procédé de fabrication d'une semelle sous traverse (1) selon l'une quelconque des revendications 1 à 6, **caractérisé par le fait que** l'on déplace le moyen de moulage de plaque de semelle (9) de manière continue sans fin le long d'une trajectoire le long de laquelle sont disposées une station initiale (35a), une station de moulage (35b) à laquelle la semelle (1) est moulée, une station de refroidissement (35c) à laquelle le matériau passe de son état fluide à son état déformable, et une station de démoulage (35d) à laquelle la semelle (1) est démoulée.

8. Procédé de fabrication d'une semelle sous traverse (1) selon la revendication 7, **caractérisé par le fait que** le système de transport (34) déplaçant le moyen de moulage de plaque de semelle (9) comprend une portion arquée (39a, 39b) déformant le moyen de moulage de plaque de semelle (9) dans le sens de l'ouverture.

9. Procédé de fabrication d'une traverse en béton ou analogue pourvue d'une semelle sous traverse (2 + 1), dans lequel :
- L'on réalise une semelle (1) selon le procédé de l'une quelconque des revendications 1 à 8,
- l'on dispose d'un moyen de moulage de traverse, rigide, formant une cavité de moulage dont la forme est en correspondance avec celle d'une traverse, apte à être emplie du béton ou analogue formant la traverse,
- l'on dispose de béton ou analogue,
- l'on emplit la cavité de moulage du moyen de moulage de traverse avec le béton ou analogue à l'état fluide,
- puis, alors que le béton ou analogue n'est pas encore pris en masse, l'on dépose sur la face de solidarisation (5) de la traverse (2) en béton ou analogue, ladite semelle (1), dans sa configuration générale finale, de sorte que ses éléments de reliefs d'accrochage (8) soient inclus dans ladite face de solidarisation (5) de la traverse (2) en béton ou analogue, et que la paroi de support (3) de la semelle (1) ne soit pas incluse ou pas totalement incluse dans ladite face de solidarisation (5) de la traverse (2) en béton ou analogue, de sorte que la face d'appui (7) de la semelle sous traverse (1) soit laissée libre pour former la face d'appui (7) de la traverse pourvue de la semelle sous traverse (2 + 1),
- puis l'on laisse le béton ou analogue de la traverse (2 + 1) prendre en masse, de sorte que la semelle sous traverse (1) fasse ainsi partie intégrante de la traverse (2), les éléments de reliefs d'accrochage (8) de la semelle (1) assurant par eux-mêmes la solidarisation rigide de la semelle sous traverse (1) à la traverse (2).

10. Procédé de fabrication d'une traverse pourvue d'une semelle sous traverse (2 + 1) selon la revendication 9, **caractérisé par le fait qu'**il comprend en outre au moins l'une des caractéristiques suivantes :
- l'on dispose le moyen de moulage de traverse de façon générale horizontale et l'on dépose la semelle (1) par-dessus la face de solidarisation (5) de la traverse (2) en béton ou analogue laissée accessible en position supérieure ;
- lors du moulage de la traverse dans la cavité de moulage du moyen de moulage de traverse, l'on fait vibrer le moyen de moulage de traverse ;
- alors que le béton ou analogue n'est pas encore pris en masse, et lorsque l'on dépose la semelle (1) sur la face de solidarisation (5) de la traverse (2), l'on effectue de petits déplacements de la semelle (1) par rapport au béton ou analogue de la traverse (2), pour le positionnement de la semelle (1) par rapport à la traverse (2) ;
- lorsque l'on dépose sur la face de solidarisation (5) de la traverse (2) en béton ou analogue, la semelle (1), l'air compris entre la semelle (1) et la traverse (2) est évacué par des trous d'évents (26, 27, 28).

11. Moyen de moulage de plaque de semelle (9) spécialement destiné à la mise en oeuvre du procédé de fabrication d'une semelle sous traverse (1) selon l'une quelconque des revendications 1 à 8, présentant une certaine rigidité et comportant une paroi latérale périphérique et une face de conformation de moulage comportant une distribution d'éléments de reliefs de moulage (16) - saillies, creux -, formant une cavité de moulage (10) apte à être emplie de la matière constitutive de la semelle (1), et dont la forme est en correspondance avec celle d'une plaque de semelle (1) d'au moins une semelle sous traverse (1) à réaliser comprenant une paroi de support (3), ayant une face d'appui (7) et à l'opposé une face de solidarisation (4) pourvue d'une distribution d'éléments de reliefs d'accrochage (8) - creux, saillies -, un tel élément de relief d'accrochage (8) comprenant une partie rétrécie proximale (11) vers la face de solidarisation (4), une partie élargie distale (12), et une ou plusieurs facettes (13) s'étendant parallèlement à, ou de façon inclinée par rapport à, la face de solidarisation (4).

12. Moyen de moulage de plaque de semelle (9) selon la revendication 11, **caractérisé par le fait qu'**il comprend au moins l'une des caractéristiques suivantes :
- il est soit un moule ouvert ou fermé et/ou qu'il est soit avec insert de constitution de reliefs de moulage (16) soit sans insert ;
- il présente une distribution d'éléments de reliefs de moulage (16) allongés et/ou ponctuels ;
- il présente une distribution, régulière ou irrégulière, d'éléments de reliefs de moulage (16) identiques ou analogues ;
- il présente une distribution d'éléments de reliefs de moulage (16) ayant en coupe longitudinale une forme générale de T, V, U à branches inclinées, ou de pseudo T, V, U à branches inclinées, ou s'inscrivant dans une enveloppe forme générale de T, de V, de U à branches inclinées, ou de pseudo T, V, U à branches inclinées ;
- il est réalisé dans un matériau déformable élastiquement, en particulier élastomère, lorsqu'on démoule la plaque de semelle (1).

13. Installation de fabrication de semelle comprenant un moyen de moulage de plaque de semelle (9) selon l'une quelconque des revendications 11 à 12, et un système de transport (34) adapté pour déplacer le moyen de moulage de plaque de semelle (9) le long d'une trajectoire le long de laquelle sont disposées une station initiale (35a), une station de moulage (35b) à laquelle la semelle (1) est moulée, une station de refroidissement (35c) à laquelle le matériau passe de son état fluide à son état déformable, et une station de démoulage (35d) à laquelle la semelle (1) est démoulée.

14. Installation de fabrication de semelle selon la revendication 13, **caractérisé par le fait que** le système de transport (34) déplaçant le moyen de moulage de plaque de semelle (9) comprend une portion arquée (39a, 39b) déformant le moyen de moulage de plaque de semelle (9) dans le sens de l'ouverture.

## Patentansprüche

1. Verfahren zur Herstellung einer Besohlung für eine Schwelle (1), umfassend eine Stützwand (3) mit einer Auflagefläche (7) und dem gegenüber eine Verbindungsfläche (4), die mit einer Verteilung von endogenen reliefartigen Verankerungselementen (8) - Vertiefungen, Erhebungen - versehen ist, die geeignet sind, die sich in ihrer allgemeinen Endausführung und im festen Zustand befindlichen Besohlung (1), in eine Verbindungsfläche (5) einer Betonschwelle (2) oder dergleichen, die dem gegenüber eine Auflagefläche (6) aufweist, eingeschlossen zu werden, wobei ein solches reliefartiges Verankerungselement (8) ein proximales, zu der Verbindungsfläche (4) zurückgesetztes Teil (11), ein distales erweitertes Teil (12) und eine oder mehrere Seitenflächen (13) umfasst, die sich parallel oder zu der Verbindungsfläche (4) geneigt erstrecken, wobei:
- ein Mittel zur Formgebung einer Besohlungsplatte (9) verfügbar ist, das eine Steifigkeit aufweist, eine laterale Seitenwand (14) und eine Formgebungsfläche (15) hat, umfassend eine Verteilung von reliefartigen Formgebungselementen (16) - Vertiefungen, Erhöhungen - die einen Formhohlraum (10) bilden, der geeignet ist, mit dem Material zur Herstellung der Besohlung (1) gefüllt zu werden, wobei die Form des Formhohlraums (10) - auf komplementäre Weise - jener der herzustellenden Besohlung (1) entspricht, wobei die Verteilung von reliefartigen Formgebungselementen (16) - auf komplementäre Weise -der Verteilung von reliefartigen Verankerungselementen (8) entspricht, wobei ein reliefartiges Formgebungselement ein proximales zurückgesetztes Teil (17), ein distales erweitertes Teil (18) und eine oder mehrere Seitenflächen (19) umfasst, die sich parallel oder zu der Formgebungsfläche (15) geneigt erstrecken,
- Polymermaterial verfügbar ist, insbesondere wärmehärtbares Elastomer aus Polyurethan, das geeignet ist, in folgende Zustände gebracht zu werden:
* zuerst in einen flüssigen Zustand zur Formung,
* in einen festen Zustand, um insbesondere die ausgeformte Besohlung (1) mit dem Beton oder dergleichen der Schwelle zu verbinden,
* und in einen verformbaren Zustand, in dem es eine zumindest im Wesentlichen elastische, vorübergehende lokale Verformungsfähigkeit aufweist,
- das Polymermaterial in den flüssigen Zustand gebracht wird, und der Formhohlraum (10) des Formgebungsmittels der Besohlungsplatte (9) zum Formen der Besohlungsplatte (1) gefüllt wird,
- später das Polymermaterial in den verformbaren Zustand gebracht wird,
- und, während das Polymermaterial im verformbaren Zustand ist, auf die vorher geformte Besohlungsplatte (1) in Bezug auf das Formgebungsmittel der Besohlungsplatte (9) eine relative Extraktionskraft ausgeübt wird, so dass seine reliefartigen Verankerungselemente (8) im verformbaren Zustand elastisch und vorübergehend verformt werden, um sie von den reliefartigen Formgebungselementen (16) zu trennen, wodurch es möglich ist, die Besohlungsplatte (1) auszuformen,
- dann die Besohlung (1), die von der Besohlungsplatte (1) gebildet ist oder von dieser stammt, in der allgemeinen Ausführung angeordnet wird, die ihre allgemeine Endausführung ist, während das Polymermaterial im festen Zustand ist.

2. Verfahren zur Herstellung einer Besohlung für eine Schwelle (1) nach Anspruch 1, ferner umfassend das eine und/oder das andere der folgenden Merkmale:
- wenn die Besohlungsplatte (1) in dem Formgebungsmittel der Besohlungsplatte (9) geformt wird, ist die Auflagefläche (7) frei oder ohne reliefartige Elemente geformt;
- das Polymermaterial wird in den verformbaren Zustand gebracht und/oder das Polymermaterial wird in den festen Zustand durch ein thermisches Verfahren gebracht;
- es ist ein Formgebungsmittel einer Besohlungsplatte (9) verfügbar, umfassend eine Verteilung von reliefartigen Formgebungselementen (16), deren Form einer Verteilung von Verankerungsreliefs (8) der Besohlungsplatte (1) entspricht, so dass ein solches Verankerungsrelief (8) ein erweitertes Teil und ein zurückgesetztes Teil umfasst, deren Durchmesser in einem Verhältnis von mindestens gleich 1,5 stehen;
- die relative Extraktionskraft wird an das Formgebungsmittel der Besohlungsplatte (9) zu ihrer lateralen Umfangswand (14) und/oder auf die Besohlungsplatte (1) ausgeübt, insbesondere zu einem an die laterale Seitenwand (14) des Formgebungsmittels der Besohlungsplatte (9) angrenzenden Rands;
- wenn die relative Extraktionskraft ausgeübt wird, wird die Stützwand (3) der Besohlungsplatte (1) elastisch und vorübergehend verformt.

3. Verfahren zur Herstellung einer Besohlung für eine Schwelle (1) nach einem der Ansprüche 1 bis 2, **dadurch gekennzeichnet, dass** die reliefartigen Verankerungselemente (8) von den reliefartigen Formgebungselementen (16) progressiv nacheinander für angrenzende Gruppen von reliefartigen Verankerungselementen (8) getrennt werden, insbesondere Gruppen von reliefartigen Verankerungselementen (8) mit lokalisiertem und begrenztem Ausmaß,
und dadurch, dass optional ein Formgebungsmittel einer Besohlungsplatte (9) mit einer Formgebungsfläche (15), umfassend mehrere aufeinanderfolgende Teile (15a) angeordnet und eingesetzt wird, insbesondere Teile einer Formgebungsfläche mit lokalisiertem und begrenztem Ausmaß

4. Verfahren zur Herstellung einer Besohlung für eine Schwelle (1) nach einem der Ansprüche 1 bis 3, **dadurch gekennzeichnet, dass** das eine und/oder das andere der folgenden Merkmale eingesetzt wird:
- wenn der Formhohlraum (10) des Formgebungsmittels der Besohlungsplatte (9) mit dem Polymermaterial gefüllt wird, wird die Besohlungsplatte (1) voll oder im Wesentlichen voll und ohne inneren Hohlraum geformt;
- der Formhohlraum (10) des Formgebungsmittels der Besohlungsplatte (9) wird mit einem einzigen Polymermaterial gefüllt, um eine einheitliche Besohlung für eine Schwelle (1) herzustellen.

5. Verfahren zur Herstellung einer Besohlung für eine Schwelle (1) nach einem der Ansprüche 1 bis 4, **dadurch gekennzeichnet, dass**, wenn der Formhohlraum (10) des Formgebungsmittels der Besohlungsplatte (9) mit dem Polymermaterial gefüllt wird, in den Formhohlraum (10) mindestens ein festes Funktionsmittel eingeschlossen wird, das in die geformte Besohlungsplatte (1) eingelassen ist und unter einem Versteifungsmittel und einem Absorptionsmittel für die Quetschspannungen ausgewählt ist;
und optional dadurch, dass, wenn der Formhohlraum (10) des Formgebungsmittels der Besohlungsplatte (9) mit dem Polymermaterial gefüllt wird, das oder die feste(n) Funktionsmittel in den Formhohlraum (10) außerhalb der Formgebungsreliefs (16) eingeschlossen wird(werden), so dass das feste Funktionsmittel in die Stützwand (3) der Besohlung (1) und nicht in die reliefartigen Verankerungselemente (8) eingelassen ist.

6. Verfahren zur Herstellung einer Besohlung für eine Schwelle (1) nach einem der Ansprüche 1 bis 5, **dadurch gekennzeichnet, dass** mindestens eines der folgenden Merkmale eingesetzt wird:
- beim Formen der Besohlungsplatte (1) in dem Formhohlraum (10) des Formgebungsmittels der Besohlungsplatte (9) wird das Formgebungsmittel der Besohlungsplatte (9) im Hinblick auf das Füllen der hohlen Teile des Formhohlraums (10) mit dem Polymermaterial zum Schwingen gebracht;
- entweder wird die Besohlungsplatte (1), die eine einzelne Besohlung für eine Schwelle (1) darstellt, geformt, oder die Besohlungsplatte (1) wird geformt, aus der mindestens einen Besohlung für eine Schwelle (1), die durch ein Querschneiden der Besohlungsplatte (1) einzeln herausgeschnitten wird;
- es ist ein Formgebungsmittel der Besohlungsplatte (9) verfügbar, dessen Formgebungsfläche (15) eine Verteilung von reliefartigen Formgebungselementen (16) umfasst, die länglich und/oder punktuell sind, und es wird eine Besohlung (1) hergestellt, umfassend eine Verteilung von reliefartigen Verankerungselementen (8), die länglich und/oder punktuell sind;
- es ist ein Formgebungsmittel einer Besohlungsplatte (9) verfügbar, dessen Formgebungsfläche (15) eine regelmäßige oder unregelmäßige Verteilung von reliefartigen, identischen oder analogen Formgebungselementen (16) umfasst, und es wird eine Besohlung (1) hergestellt, umfassend eine regelmäßige oder unregelmäßige Verteilung von, reliefartigen, identischen oder analogen Verankerungselementen (8);
- es ist ein Formgebungsmittel einer Besohlungsplatte (9) verfügbar, dessen Formgebungsfläche (15) eine Verteilung von reliefartigen Formgebungselementen (16) umfasst mit im Längsschnitt einer allgemeinen Form eines T, V, U mit geneigten Schenkeln oder eines pseudo T, V, U mit geneigten Schenkeln oder die in eine Hülle von allgemeiner Form eines T, V, U mit geneigten Schenkeln oder eines pseudo T, V, U mit geneigten Schenkeln eingeschrieben ist, und es wird eine Besohlung (1) hergestellt, umfassend eine Verteilung von reliefartigen Verankerungselementen (8) mit einer entsprechenden Form;
- das Polyurethan wird als Polymermaterial gewählt,
- das Formgebungsmittel der Besohlungsplatte (9) ist aus einem elastisch verformbaren Material hergestellt, insbesondere Elastomer, wenn die Besohlungsplatte (1) ausgeformt wird.

7. Verfahren zur Herstellung einer Besohlung für eine Schwelle (1) nach einem der Ansprüche 1 bis 6, **dadurch gekennzeichnet, dass** das Formgebungsmittel der Besohlungsplatte (9) kontinuierlich endlos entlang einer Bahn verschoben wird, entlang der eine Ausgangsstation (35a), eine Formgebungsstation (35b), an der die Besohlung (1) geformt wird, eine Kühlstation (35c), an der das Material von seinem flüssigen Zustand in seinen verformbaren Zustand übergeht, und eine Ausformungsstation (35d), an der die Besohlung (1) ausgeformt wird, angeordnet sind.

8. Verfahren zur Herstellung einer Besohlung für eine Schwelle (1) nach Anspruch 7, **dadurch gekennzeichnet, dass** das Transportsystem (34), das das Formgebungsmittel der Besohlungsplatte (9) verschiebt, einen gebogenen Abschnitt (39a, 39b) umfasst, der das Formgebungsmittel der Besohlungsplatte (9) in Richtung der Öffnung verformt.

9. Verfahren zur Herstellung einer Schwelle aus Beton oder dergleichen, die mit einer Besohlung für eine Schwelle (2 + 1) versehen ist, bei dem:
- eine Besohlung (1) nach dem Verfahren eines der Ansprüche 1 bis 8 hergestellt wird,
- ein Formgebungsmittel für eine Schwelle verfügbar ist, das starr ist, einen Formhohlraum bildet, dessen Form mit jener einer Schwelle übereinstimmt, die geeignet ist, mit Beton oder dergleichen, der die Schwelle bildet, gefüllt zu werden,
- Beton oder dergleichen verfügbar ist,
- der Formhohlraum des Formgebungsmittels für eine Schwelle mit Beton oder dergleichen im flüssigen Zustand gefüllt wird,
- dann, wenn der Beton oder dergleichen noch nicht verfestigt ist, auf der Verbindungsfläche (5) der Schwelle (2) aus Beton oder dergleichen die Besohlung (1) in ihrer allgemeinen Endausführung aufgebracht wird, so dass ihre reliefartigen Verankerungselemente (8) in die Verbindungsfläche (5) der Schwelle (2) aus Beton oder dergleichen eingeschlossen sind, und dass die Stützwand (3) der Besohlung (1) nicht oder nicht zur Gänze in die Verbindungsfläche (5) der Schwelle (2) aus Beton oder dergleichen eingeschlossen ist, so dass die Auflagefläche (7) der Besohlung für eine Schwelle (1) frei gelassen wird, um die Auflagefläche (7) der Schwelle, die mit der Besohlung für eine Schwelle (2 + 1) versehen ist, zu bilden,
- der Beton oder dergleichen der Schwelle (2 + 1) fest werden gelassen wird, so dass die Besohlung für eine Betonschwelle (1) somit Bestandteil der Schwelle (2) ist, wobei die reliefartigen Verankerungselemente (8) der Besohlung (1) von sich aus die starre Verbindung der Besohlung für eine Schwelle (1) mit der Schwelle (2) gewährleisten.

10. Verfahren zur Herstellung einer Schwelle nach Anspruch 9, die mit einer Besohlung für eine Schwelle (2 + 1) versehen ist, **dadurch gekennzeichnet, dass** es ferner mindestens eines der folgenden Merkmale umfasst:
- das Formgebungsmittel für eine Schwelle wird auf allgemein horizontale Weise angeordnet, und die Besohlung (1) wird über der Verbindungsfläche (5) der Schwelle (2) aus Beton oder dergleichen angeordnet, die in der oberen Position zugänglich bleibt;
- bei der Formung der Schwelle in dem Formhohlraum des Formgebungsmittels für eine Schwelle wird das Formgebungsmittel für die Schwelle zum Schwingen gebracht;
- während der Beton oder dergleichen noch nicht verfestigt ist, und wenn die Besohlung (1) auf die Verbindungsfläche (5) der Schwelle (2) aufgebracht wird, erfolgen kleine Verschiebungen der Besohlung (1) in Bezug zu dem Beton oder dergleichen der Schwelle (2) zur Positionierung der Schwelle (1) in Bezug zur Schwelle (2);
- wenn auf die Verbindungsfläche (5) der Schwelle (2) aus Beton oder dergleichen die Besohlung (1) aufgebracht wird, wird die zwischen der Besohlung (1) und der Schwelle (2) vorhandene Luft durch Abzugslöcher (26, 27, 28) abgeleitet.

11. Formgebungsmittel einer Besohlungsplatte (9), das speziell für den Einsatz des Verfahrens zur Herstellung einer Besohlung für eine Schwelle (1) nach einem der Ansprüche 1 bis 8 bestimmt ist, das eine gewisse Steifigkeit aufweist und eine laterale Seitenwand und eine Formgebungsfläche umfasst, umfassend eine Verteilung von reliefartigen Formgebungselementen (16) - Vertiefungen, Erhöhungen - die einen Formhohlraum (10) bilden, der geeignet ist, mit dem Material zur Herstellung der Besohlung (1) gefüllt zu werden, und deren Form jener einer Besohlungsplatte (1) mindestens einer herzustellenden Besohlung für eine Schwelle (1) entspricht, umfassend eine Stützwand (3) mit einer Auflagefläche (7) und dem gegenüber eine Verbindungsfläche (4), die mit einer Verteilung von reliefartigen Verankerungselementen (8) - Vertiefungen, Erhöhungen - versehen ist, wobei ein solches reliefartiges Verankerungselement (8) ein proximales, zu der Verbindungsfläche (4) zurückgesetztes Teil (11), ein distales erweitertes Teil (12) und eine oder mehrere Seitenflächen (13) umfasst, die sich parallel oder zu der Verbindungsfläche (4) geneigt erstrecken.

12. Formgebungsmittel einer Besohlungsplatte (9) nach Anspruch 11, **dadurch gekennzeichnet, dass** es mindestens eines der folgenden Merkmale umfasst:
- es ist entweder eine offene oder eine geschlossene Form und/oder mit Einsatz zur Bildung von Formgebungsreliefs (16) oder ohne Einsatz;
- es weist eine Verteilung von reliefartigen Formgebungselementen (16) auf, die länglich und/oder punktuell sind;
- es weist eine regelmäßige oder unregelmäßige Verteilung von, reliefartigen, identischen oder analogen Formgebungselementen (16) auf;
- es weist eine Verteilung von reliefartigen Formgebungselementen (16) mit im Längsschnitt einer allgemeinen Form eines T, V, U mit geneigten Schenkeln auf, oder eines pseudo T, V, U mit geneigten Schenkeln oder die in eine Hülle von allgemeiner Form eines T, V, U mit geneigten Schenkeln oder eines pseudo T, V, U mit geneigten Schenkeln eingeschrieben ist;
- es ist aus einem elastisch verformbaren Material, insbesondere Elastomer, hergestellt, wenn die Besohlungsplatte (1) ausgeformt wird.

13. Anlage zur Herstellung einer Besohlung, umfassend ein Formgebungsmittel einer Besohlungsplatte (9) nach einem der Ansprüche 11 bis 12, und ein Transportsystem (34), das dazu vorgesehen ist, das Formgebungsmittel der Besohlungsplatte (9) entlang einer Bahn zu verschieben, entlang der eine Ausgangsstation (35a), eine Formgebungsstation (35b), an der die Besohlung (1) geformt wird, eine Kühlstation (35c), an der das Material von seinem flüssigen Zustand in seinen verformbaren Zustand übergeht, und eine Ausformungsstation (35d), an der die Besohlung (1) ausgeformt wird, angeordnet sind.

14. Anlage zur Herstellung einer Besohlung nach Anspruch 13, **dadurch gekennzeichnet, dass** das Transportsystem (34), das das Formgebungsmittel der Besohlungsplatte (9) verschiebt, einen gebogenen Abschnitt (39a, 39b) umfasst, der das Formgebungsmittel der Besohlungsplatte (9) in Richtung der Öffnung verformt.

## Claims

1. A method for manufacturing an under sleeper pad (1) comprising a supporting wall (3) having a bearing face (7) and on its opposite side a securing face (4) provided with a distribution of endogenous coupling relief elements (8) - projections, recesses - capable, the pad (1) being in its final general configuration and in the solid state, of being embedded in a securing face (5) of a sleeper (2) of concrete or the like having a supporting face (6) on its opposite side, such a coupling relief element (8) comprising a proximal narrow portion (11) towards the securing face (4), a distal enlarged portion (12), and one or more facets (13) extending parallel to or inclined with respect to the securing face (4), wherein:
- a pad plate molding means (9) having a certain rigidity is provided, comprising a peripheral side wall (14) and a mold shaping face (15) comprising a distribution of mold relief elements (16) - projections, recesses -, forming a mold cavity (10) adapted to be filled with the constituent material of the pad (1), the shape of the mold cavity (10) corresponding - in a complementary manner - with that of the pad (1) to be created, the distribution of mold relief elements (16) being in correspondence - in a complementary manner - with the distribution of coupling relief elements (8), a mold relief element comprising a proximal narrow portion (17), a distal enlarged portion (18), and one or more facets (19) extending parallel to or inclined with respect to the mold shaping face (15),
- polymeric material is provided, in particular thermoset polyurethane elastomer, able to be brought:
• first to a fluid state for the purposes of molding,
• to a solid state in order in order to associate the demolded pad (1) with the concrete or similar of the sleeper,
• and to a deformable state in which it has a capacity for temporary local and at least substantially elastic deformation,
- the polymeric material is brought to said fluid state and the mold cavity (10) of the pad plate molding means (9) is filled with it for the purposes of molding the pad plate (1),
- at a later stage, the polymeric material is brought to said deformable state,
- and, while the polymeric material is in the deformable state, a relative extraction force is exerted on the previously molded pad plate (1) relative to the pad plate molding means (9), such that its coupling relief elements (8) are elastically and temporarily deformed in said deformable state so as to detach the mold relief elements(16), thereby permitting the demolding of the pad plate (1),
- then, the pad (1) constituted by or coming from the pad plate (1) is provided in the general configuration which is its final general configuration when the polymeric material is in said solid state.

2. Method for manufacturing an under sleeper pad (1) according to claim 1, further comprising one or more of the following features:
- when the pad plate (1) is molded in the pad plate molding means (9), the bearing face (7) is open or molded without relief elements;
- the polymeric material is brought to said deformable state and/or the polymeric material is brought to said solid state, by a thermal process;
- a pad plate molding means (9) is provided comprising a distribution of mold relief elements (16) of which the shape corresponds to a distribution of coupling reliefs (8) of the pad plate (1) such that such a coupling relief (8) comprises an enlarged portion and a narrow portion for which the ratio of the diameters is equal to at least 1,5;
- the relative extraction force is applied to the pad plate molding means (9), towards its peripheral side wall (14) and /or on the pad plate (1), in particular towards an edge adjacent to the peripheral side wall (14) of the pad plate molding means (9);
- when the relative extraction force is exerted, the supporting wall (3) of the pad plate (1) is elastically and temporarily deformed.

3. Method for manufacturing an under sleeper pad (1) according to any one of claims 1 to 2, wherein the coupling relief elements (8) are progressively separated from the mold relief elements (16), successively for adjacent groups of coupling relief elements (8), in particular groups of coupling relief elements (8) of localized and limited extent,
and wherein, optionally, a pad plate molding means (9) is provided and utilized having a mold shaping face (15) comprising a plurality of successive portions (15a), in particular mold shaping face portions of localized and limited extent.

4. Method for manufacturing an under sleeper pad (1) according to any one of claims 1 to 3, wherein one or more of the following features are implemented:
- when the mold cavity (10) of the pad plate molding means (9) is filled with the polymeric material, the pad plate (1) is molded to be solid or substantially solid and devoid of any inner cavity;
- the mold cavity (10) of the pad plate molding means (9) is filled with a single polymeric material so as to create an under sleeper pad (1) as a single piece.

5. Method for manufacturing an under sleeper pad (1) according to any one of claims 1 to 4, wherein, when the mold cavity (10) of the pad plate molding means (9) is filled with the polymeric material, at least one functional solid means is incorporated in the mold cavity (10), embedded in the molded pad plate (1), chosen from among a stiffening means and a crushing stress absorption means,
and optionally wherein, when the mold cavity (10) of the pad plate molding means (9) is filled with the polymer material, the at least one functional solid means is incorporated in the mold cavity (10) outside the mold reliefs (16), such that the functional solid means is embedded in the supporting wall (3) of the pad (1) and not in the coupling relief elements (8).

6. Method for manufacturing an under sleeper pad (1) according to any one of claims 1 to 5, wherein at least one of the following features is implemented:
- when molding the pad plate (1) in the mold cavity (10) of the pad plate molding means (9), the pad plate molding means (9) is vibrated in order to fill the recessed portions of the mold cavity (10) with the polymeric material;
- either the pad plate (1) constitutes an under sleeper pad (1) and is molded alone or the pad plate (1) is molded and at least one under sleeper pad (1) is separated from it by cutting the pad plate (1) transversely;
- a pad plate molding means (9) is provided in which the mold shaping face (15) comprises a distribution of elongated and/or isolated mold relief elements (16), and a pad (1) is created having a distribution of elongated and/or isolated coupling relief elements (8);
- a pad plate molding means (9) is provided in which the mold shaping face (15) comprises a regular or irregular distribution of identical or similar mold relief elements (16), and a pad (1) is created comprising a regular or irregular distribution of identical or similar coupling relief elements (8);
- a pad plate molding means (9) is provided in which the mold shaping face (15) comprises a distribution of mold relief elements (16) having a longitudinal cross-section in the general shape of a T, V, U with inclined arms, or a pseudo T, V, U with inclined arms, or inscribed within an envelope in the general shape of a T, V, U with inclined arms, or a pseudo T, V, U with inclined arms, and a pad (1) is created comprising a distribution of coupling relief elements (8) having a corresponding shape;
- polyurethane is selected as the polymeric material.
- the pad plate molding means (9) is created of a material that is elastically deformable, when demolding the pad plate (1), in particular elastomer.

7. Method for manufacturing an under sleeper pad (1) according to any one of claims 1 to 6, wherein the pad plate molding means (9) are moved continuously and endlessly along a path alongside of which are arranged an initial station (35a), a molding station (35b) where the pad (1) is molded, a cooling station (35c) where the material passes from its fluid state to its deformable state, and a demolding station (35d) where the pad (1) is demolded.

8. Method for manufacturing an under sleeper pad (1) according to claim 7, wherein the transport system (34) moving the pad plate molding means (9) comprises an arcuate portion (39a, 39b) deforming the pad plate molding means (9) in the opening direction.

9. Method for manufacturing a sleeper of concrete or similar provided with an under sleeper pad (2 + 1), wherein:
- a pad (1) is created according to the method of any one of claims 1 to 8,
- a rigid sleeper molding means is provided, forming a mold cavity having a shape corresponding to that of a sleeper, adapted to be filled with concrete or similar to form the sleeper,
- concrete or similar is provided,
- the mold cavity of the sleeper molding means is filled with concrete or similar in the fluid state,
- then, while the concrete or similar has not yet set, said pad (1) in its final general configuration is deposited on the securing face (5) of the sleeper (2) of concrete or similar, such that the coupling relief elements (8) are embedded in said securing face (5) of the sleeper (2) of concrete or similar and the supporting wall (3) of the pad (1) is not embedded or is not completely embedded in said securing face (5) of the sleeper (2) of concrete or similar, so that the bearing face (7) of the under sleeper pad (1) is left free to form the bearing face (7) of the sleeper provided with the under sleeper pad (2 + 1),
- then, the concrete or similar of the sleeper (2 + 1) is allowed to set, such that the under sleeper pad (1) thus becomes an integral part of the sleeper (2), the coupling relief elements (8) of the pad (1) themselves ensuring the rigid securing of the under sleeper pad (1) to the sleeper (2).

10. Method for manufacturing a sleeper provided with an under sleeper pad (2 + 1) according to claim 9, further comprising at least one of the following features:
- the sleeper molding means is arranged generally horizontally and the pad (1) is arranged on top of the securing face (5) of the sleeper (2) of concrete or similar left accessible from the upper position;
- when molding the sleeper in the mold cavity of the sleeper molding means, the sleeper molding means is made to vibrate;
- while the concrete or similar has not yet set, and when the pad (1) is placed on the securing face (5) of the sleeper (2), small movements of the pad (1) relative to the concrete or similar of the sleeper (2) are carried out in order to position the pad (1) relative to the sleeper (2);
- when placing the pad (1) on the securing face (5) of the sleeper (2) of concrete or similar, the air between the pad (1) and the sleeper (2) is discharged through vent holes (26, 27, 28).

11. Pad plate molding means (9) particularly intended for the implementation of the method for manufacturing an under sleeper pad (1) according to any one of claims 1 to 8, having a certain rigidity and comprising a peripheral side wall and a mold shaping face comprising a distribution of mold relief elements (16) - projections, recesses -, forming a mold cavity (10) adapted to be filled with the constituent material of the pad (1) and whose shape corresponds to that of a pad plate (1) of at least one under sleeper pad (1) to be created comprising a supporting wall (3) having a bearing face (7) and on its opposite side a securing face (4) provided with a distribution of coupling relief elements (8) - recesses, projections -, such a coupling relief element (8) comprising a proximal narrow portion (11) towards the securing face (4), a distal enlarged portion (12), and one or more facets (13) extending parallel to or inclined with respect to the securing face (4).

12. Pad plate molding means (9) according to claim 11, comprising at least one of the following features:
- it is either an open or closed mold and/or is either with an insert for forming the mold reliefs (16) or is without an insert;
- it presents a distribution of elongated and/or isolated mold relief elements (16);
- it presents a regular or irregular distribution of identical or similar mold relief elements (16);
- it presents a distribution of mold relief elements (16) having a longitudinal cross-section in the general shape of a T, V, U with inclined arms, or a pseudo T, V, U with inclined arms, or inscribed within an envelope in the general shape of a T, V, U with inclined arms, or a pseudo T, V, U with inclined arms;
- it is made of a material that is elastically deformable when demolding the pad plate (1), in particular elastomer.

13. Pad manufacturing facility comprising a pad plate molding means (9) according to any one of claims 11 to 12, and a transport system (34) adapted to move the pad plate molding means (9) along a path alongside of which are arranged an initial station (35a), a molding station (35b) where the pad (1) is molded, a cooling station (35c) where the material passes from its fluid state to its deformable state, and a demolding station (35d) where the pad (1) is demolded.

14. Pad manufacturing facility according to claim 13, wherein the transport system (34) moving the pad plate molding means (9) comprises an arcuate portion (39a, 39b) deforming the pad plate molding means (9) in the opening direction.
